(19) Europäisches Patentamt
European Patent Office
Office européen des brevets

(11) **EP 1 507 752 B1**

(12) **EUROPÄISCHE PATENTSCHRIFT**

(45) Veröffentlichungstag und Bekanntmachung des Hinweises auf die Patenterteilung:
**21.05.2008 Patentblatt 2008/21**

(21) Anmeldenummer: **03755907.7**

(22) Anmeldetag: **28.05.2003**

(51) Int Cl.:
*C04B 41/87* (2006.01)   *C04B 41/89* (2006.01)

(86) Internationale Anmeldenummer:
**PCT/DE2003/001741**

(87) Internationale Veröffentlichungsnummer:
**WO 2003/101912 (11.12.2003 Gazette 2003/50)**

(54) **KERAMISCHER FORMKÖRPER MIT PHOTOKATALYTISCHER BESCHICHTUNG UND VERFHAREN ZUR HERSTELLUNG DESSELBEN**

CERAMIC MOULDED BODY COMPRISING A PHOTOCATALYTIC COATING AND METHOD FOR PRODUCING THE SAME

CORPS CERAMIQUE MOULE A REVETEMENT PHOTOCATALYTIQUE ET SON PROCEDE DE REALISATION

(84) Benannte Vertragsstaaten:
**AT BE BG CH CY CZ DE DK EE ES FI FR GB GR HU IE IT LI LU MC NL PT RO SE SI SK TR**

(30) Priorität: **29.05.2002 DE 10224110**

(43) Veröffentlichungstag der Anmeldung:
**23.02.2005 Patentblatt 2005/08**

(73) Patentinhaber: **ERLUS AKTIENGESELLSCHAFT 84088 Neufahrn (DE)**

(72) Erfinder:
• **THIERAUF, Axel 84066 Mallersdorf-Pfaffenberg (DE)**
• **BAUER, Frederike 93170 Bruhardwald (DE)**

• **GAST, Eduard 84559 Kraiburg (DE)**

(74) Vertreter: **Köhler, Walter Louis,&Pöhlau,&Lohrentz Patentanwälte P.O. Box 30 55 90014 Nürnberg (DE)**

(56) Entgegenhaltungen:
**EP-A- 1 072 572       EP-A- 1 095 923**
**WO-A-01/79141        WO-A-99/44954**
**FR-A- 2 788 707       FR-A- 2 816 610**

• **ROSENBERGER J: "Herstellung und Charakterisierung von dünnen Bariumtitanatschichten" 1994 , SAARBRÜCKEN XP002255640 Seite 28**

EP 1 507 752 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen keramischen Formkörper aus oxidkeramischem Basismaterial mit bei Beregnung oder Berieselung mit Wasser selbstreinigender Oberfläche sowie ein Verfahren zur Herstellung desselben.

Aus der EP 0 590 477 B1 ist ein Baumaterial bekannt, das beispielsweise ein Außenwandmaterial oder Dachmaterial sein kann, wobei auf der Oberfläche des Baumaterials ein dünner Metalloxidfilm mit photokatalytischer Wirkung aufgebracht ist. Der Metalloxidfilm wird bevorzugt mittels Sol-Gel-Verfahren aufgebracht. Bevorzugt wird unter Verwendung von Titandioxidsol ein Titandioxid-Dünnfilmbaumaterial hergestellt. Der aus der EP 0 590 477 B1 bekannte dünne Metalloxidfilm weist desodorierende Antischimmeleigenschaften auf.

Der aus der EP 0 590 477 B1 bekannte Metalloxidfilm weist aufgrund seiner filmartigen Struktur eine kleine Oberfläche und mithin eine niedrige katalytische Aktivität auf.

Aus der DE 199 11 738 A1 ist ein mit $Fe^{3+}$-Ionen dotierter Titandioxid-Photokatalysator bekannt, der einen zu den $Fe^{3+}$-Ionen äquimolaren oder annähernd äquimolaren Gehalt an fünfwertigen Ionen aufweist. Der aus der DE 199 11 738 A1 bekannte, mit $Fe^{3+}$-Ionen dotierte Titandioxid-Photokatalysator wird über Sol-Gel-Verfahren hergestellt.

Aus der EP 0 909 747 A1 ist ein Verfahren zur Erzeugung einer Selbstreinigungseigenschaft von Oberflächen, insbesondere der Oberfläche von Dachziegeln, bei Beregnung oder Berieselung mit Wasser bekannt. Die Oberfläche weist hydrophobe Erhebungen mit einer Höhe von 5 bis 200 $\mu$m in verteilter Form auf. Zur Erzeugung dieser Erhebungen wird eine Oberfläche mit einer Dispersion von Pulverpartikeln aus inertem Material in einer Siloxan-Lösung benetzt und das Siloxan anschließend ausgehärtet. Das aus der EP 0 909 747 A1 bekannte Verfahren erlaubt die Herstellung eines grobkeramischen Körpers, der eine Oberfläche aufweist, an der Schmutzpartikel schlecht haften können. Der aus der EP 0 909 747 A1 bekannte keramische Körper verfügt über keinerlei katalytische Aktivität.

Aus der WO 01/79141 A1 ist ein weiteres Verfahren zur Erzeugung einer Selbstreinigungseigenschaft einer Oberfläche sowie ein mit diesem Verfahren hergestellter Gegenstand bekannt. Gemäß diesem Verfahren wird auf eine Oberfläche mittels eines Sol-Gel-Verfahrens eine metallorganische Verbindung des Titanoxids aufgetragen, die Oberfläche getrocknet und anschließend bei höherer Temperatur getempert. Die Oberfläche der Titanoxidschicht kann nachfolgend hydrophobiert werden.

Die FR 2788707 beschreibt ein Verfahren zur Behandlung von Substraten, umfassend die Schritte, bestehend aus: 1. Behandlung der Substrate mit einer Dispersion aus photokatalytischen Teilchen, 2. Behandlung der Substrate mit mindestens einer silikonisierten Verbindung, ausgewählt aus Silikonaten und Polyorganosiloxanen.

Die FR 2816610 beschreibt eine wässrige Dispersion, umfassend katalytische Titandioxidteilchen, ein anionisches wasserlösliches Dispergiermittel mit einem Molekulargewicht von nicht mehr als 5000 und ein amphoteres, wasserlösliches filmbildendes Polymer dessen anionische Ladung nicht höher ist als dessen kationische Ladung, wobei der pH-Wert der Dispersion nicht weniger als 3 beträgt.

Aufgabe der Erfindung ist es, einen grobkeramischen Formkörper, insbesondere Dachbaustoffe, Fassadenplatten und Vormauersteine bereitzustellen, der eine verbesserte Selbstreinigungskraft und eine verbesserte Stabilität, wie beispielsweise verbesserte Abriebbeständigkeit, aufweist.

Eine weitere Aufgabe ist es, ein Verfahren zur Herstellung eines solchen verbesserten grobkeramischen Formkörpers anzugeben.

Die der Erfindung zugrunde liegende Aufgabe wird durch einen keramischen Formkörper, nämlich ein Dachziegel, Ziegel, Klinker, Vormauerstein,

Fassadenplatte oder eine Fassadenwand aus oxidkeramischem Basismaterial mit Kapillargefüge und mit bei Beregnung oder Berieselung mit Wasser selbstreinigender Oberfläche, wobei der Formkörper eine poröse oxidkeramische Beschichtung aufweist, wobei die Beschichtung photokatalytisch aktiv ist und die photokatalytisch aktiven, oxidkeramischen Materialien $TiO_2$, $Al_2O_3$ und $SiO_2$ umfaßt, wobei das $Al_2O_3$ Aluminiumoxid C ist, und eine spezifische Oberfläche in einem Bereich von 25 m²/g bis 200 m²/g, vorzugsweise von 40 m²/g bis 150 m²/g, aufweist, gelöst.

Bevorzugte Weiterbildungen des keramischen Formkörpers sind in den abhängigen Ansprüchen 2 bis 31 angegeben.

Die Aufgabe wird weiterhin gelöst durch ein Verfahren zur Herstellung eines grobkeramischen Formkörpers namlich eines Dachziegel, ziegels, Klinkers oder einen Fassadenwand, aus oxidkeramischem Basismaterial mit Kapillargefüge und mit bei Beregnung oder Berieselung mit Wasser selbstreinigender Oberfläche, wobei der Formkörper eine photokatalytisch aktive, poröse oxidkeramische Beschichtung ausfweist, die die photokatalytisch aktivon, oxid keramischen Materialein $TiO_2$, $Al_2O_3$ und $SiO_2$ umfaßt, wobei das $Al_2O_3$ Aluminiumoxid C ist, mit einer spezifischen Oberfläche in einem Bereich von 25 m²/g bis 200 m²/g, vorzugsweise von 40 m²/g bis 150 m²/g, und die poröse oxidkeramische Beschichtung auf der Oberfläche und in den Porenöffnungen sowie den freien Flachen des Kapillargefuges bis zu eines Tiele von 2mm, gemessen in vertikale Lichtung von der Oberfläche des keramischen Formkorpers in den grobkeramischen Formkörpers aufgebracht ist, wobei das Verfahren die folgenden Schritte umfasst:

(a) Mischen von photokatalytisch aktivem, oxidkeramischem Pulver, des $TiO_2$ und $Al_2O_3$ umfaßt, wobei das $Al_2O_3$ Aluminiumoxid Cidilinem anorganischem Stabilisierungsmittel, das $SiO_2$ umfaßt, sowie einer Flüssigphase unter Bereitstellung einer Suspension,

(b) Aufbringen der in Schritt (a) hergestellten Suspension auf das oxidkeramische Basismaterial unter Ausbildung einer Schicht,

(c) Härten der in Schritt (b) bereitgestellten Schicht unter Ausbildung einer photokatalytisch aktiven, porösen oxidkeramischen Beschichtung.

Bevorzugte Weiterbildungen dieses Verfahrens sind in den abhängigen Patentansprüchen 33 bis 55 angegeben.

Der gemäß dem erfindungsgemäßen Verfahren hergestellte grobkeramische Formkörper weist eine sehr geeignete Porosität und Stabilität auf.

Im Unterschied zu den im Stand der Technik bevorzugt verwendeten Sol-Gel-Verfahren zur Herstellung von Beschichtungen wird erfindungsgemäß eine Suspension von photokatalytisch aktivem, oxidkeramischem Pulver mit weiteren Komponenten auf einem oxidkeramischen Basismaterial aufgetragen. Die photokatalytisch aktiven, oxidkeramischen Partikel bzw. das photokatalytisch aktive, oxidkeramische Pulver weisen bzw. weist eine hohe Porosität, d.h. spezifische Oberfläche auf. Es kommt mithin nicht zur Ausbildung eines Films, sondern zur Ausbildung einer porösen Struktur mit großer spezifischer Oberfläche.

Die unter Verwendung von Sol-Gel-Verfahren auf Substraten verschiedenster Art hergestellten Beschichtungen aus Titanoxid sind dichte, geschlossene und optisch transparente Filme. Eine Grobkeramik wie beispielsweise ein Dachziegel weist eine spezifische Oberfläche von kleiner als 1 $m^2$/g auf. Folglich weist eine unter Verwendung eines Sol-Gel-Verfahrens auf einem Dachziegel aufgebrachte $TiO_2$-Beschichtung ebenfalls eine spezifische Oberfläche von weniger als 1 $m^2$/g auf.

Die gemäß der vorliegenden Erfindung hergestellten mit einer photokatalytisch aktiven Beschichtung versehenen Grobkeramiken weisen eine ungleich höhere spezifische Oberfläche in einem Bereich von etwa 25 $m^2$/g bis etwa 200 $m^2$/g auf.

Diese außerordentlich hohe spezifische Oberfläche wird erfindungsgemäß erreicht, indem auf das zu beschichtende Substrat Partikel, beispielsweise partikuläres $TiO_2$, aufgebracht werden. Bei Aufbringung von partikulärem $TiO_2$ wird - im Unterschied zur Aufbringung von $TiO_2$ mittels Gel-Sol-Verfahren - kein geschlossener Film, sondern eine texturierte Beschichtung oder Struktur mit großer spezifischer Oberfläche aufgebracht. Des weiteren trägt die Porosität der beispielsweise verwendeten $TiO_2$-Partikel auch wesentlich zu der hohen spezifischen Oberfläche der porösen, oxidkeramischen Beschichtung der erfindungsgemäßen Keramik bzw. Grobkeramik bei.

Die mit $TiO_2$-Partikeln erfindungsgemäß beschichteten Grobkeramik, beispielsweise einem Dachziegel, führen die $TiO_2$-Partikel auf der Oberfläche der Grobkeramik zu einer Lichtstreuung, die sich im sichtbaren Bereich dadurch bemerkbar macht, daß die Grobkeramik ein bläulich/violettes Irisieren aufweist. Dieser optische Effekt ist vermutlich auf den Tyndall-Effekt zurückzuführen. Das heißt, der rote Farbton einer gebrannten Grobkeramik, beispielsweise eines Ton-Dachziegels, wird für einen Betrachter mehr in Richtung dunkelrot bzw. braunrot verschoben.

Die ausgebildete Struktur ist eine hochporöse Struktur, d.h. die spezifische Oberfläche der katalytisch aktiven, porösen oxidkeramischen Beschichtung liegt in einem Bereich von 25 $m^2$/g bis 200 $m^2$/g, weiter bevorzugt in einem Bereich von etwa 40 $m^2$/g bis etwa 150 $m^2$/g. Weiter bevorzugt liegt die spezifische Oberfläche in einem Bereich von 40 $m^2$/g bis etwa 100 $m^2$/g.

Die katalytisch aktive, poröse oxidkeramische Beschichtung ist sowohl auf der Oberfläche der Keramik bzw. Grobkeramik als auch in dem Kapillargefüge aufgebracht. Das heißt, die Porenöffnungen und die freien Flächen in den Kapillarröhren sind mit der katalytisch aktiven, porösen oxidkeramischen Beschichtung versehen. Die Beschichtung ist dabei vorzugsweise bis zu einer Tiefe von 2 mm in dem unmittelbar unter der Oberfläche des grobkeramischen Formkörpers liegenden Kapillargefüge, vorzugsweise in gleichmäßiger Verteilung der Partikelgrößen und Partikelarten aufgebracht. Die Tiefe ist dabei in vertikaler Richtung, bezogen auf die Oberfläche des Formkörpers, in das Innere des Formkörpers angegeben.

Gemäß einer bevorzugten Weiterbildung ist der freie Atmungsquerschnitt des keramischen bzw. grobkeramischen Formkörpers durch die aufgebrachte poröse oxidkeramische Beschichtung um weniger als 10 %, vorzugsweise weniger als 5 %, bezogen auf den freien Atmungsquerschnitt eines nicht beschichteten keramischen bzw. grobkeramischen Formkörpers, herabgesetzt.

Weiter bevorzugt ist der freie Atmungsquerschnitt um weniger als etwa 2 %, noch weiter bevorzugt um weniger als etwa 1 %, herabgesetzt.

Der mittlere Durchmesser der Poren bzw. Kapillaren einer Grobkeramik liegt üblicherweise in einem Bereich von 0,1 μm bis 5 μm, vorzugsweise 0,1 μm bis 0,3 μm.

Die Keramik, d.h. der Dachziegel, Ziegel, Klinker, Vormauerstein, Fassadenplatte oder die Fassadenwand, bzw. die über das erfindungsgemäße Verfahren hergestellte Grobkeramik weist mithin äußerst vorteilhaft eine photokatalytisch aktive Beschichtung in der Porenstruktur auf, so dass in den Poren abgelagerte Verunreinigungen wirksam oxidiert und nachfolgend bei Beregnung oder Berieselung leicht abgespült werden .

Da die Porenstruktur der Grobkeramik durch die aufgebrachte Beschichtung nicht wesentlich verengt wird, können die Schmutzpartikel ohne weiteres aus den Poren herausgespült werden.

Die erfindungsgemäße Grobkeramik zeigt mithin auch nach längerem Gebrauch, insbesondere unter natürlichen Umwelt- und Bewitterungsbedingungen, aufgrund der verbesserten Selbstreinigungseigenschaft eine saubereres und attraktives Aussehen.

Mit einer spezifischen Oberfläche von etwa 50 m$^2$/g wird eine sehr zufriedenstellende katalytische Aktivität der aufgebrachten oxidkeramischen Beschichtung erhalten. Dabei liegt die mittlere Schichtdicke der oxidkeramischen Beschichtung vorzugsweise in einem Bereich von etwa 50 nm bis etwa 50 $\mu$m, weiter bevorzugt von etwa 100 nm bis etwa 1 $\mu$m. Dabei ist die Schicht nicht nur in den Poren bzw. Kapillaren der Oberfläche, sondern auch auf der Oberfläche des grobkeramischen Formkörpers ausgebildet. Auf diese Weise können partiell Schichtdicken der oxidkeramischen Beschichtung ausgebildet sein, die größer als der mittlere Durchmesser der Poren bzw. Kapillaren sind, die üblicherweise in einem Bereich von 0,1 $\mu$m bis 5 $\mu$m liegen. Mit einer Schichtdicke von etwa 1 $\mu$m wird eine sehr zufriedenstellende katalytische Aktivität erhalten.

Mit der erfindungsgemäßen photokatalytisch aktiven, porösen oxidkeramischen Beschichtung werden auf dem grobkeramischen Formkörper sich ablagernde(r) bzw. einlagernde(r) Schimmel, Pilzhyphen, Pflanzenwuchs, beispielsweise Moos, Algen etc., bakterielle Verunreinigungen etc., photochemisch abgebaut und entfernt. Die photokatalytische Aktivität der porösen oxidkeramischen Beschichtung ist bei Umgebungstemperatur ausreichend, um die genannten Stoffe bzw. Verunreinigungen zu oxidieren und somit abzubauen. Die oxidierten Substanzen weisen ein vermindertes Haftungsvermögen auf und werden bei Beregnung bzw. Berieselung mit Wasser leicht von der Oberfläche des erfindungsgemäßen Formkörpers abgespült.

Es wird vermutet, dass die photokatalytisch aktive Beschichtung zum einen unmittelbar auf die organischen Verunreinigungen oxidativ einwirken kann. Zum anderen wird angenommen, dass die oxidative Wirkung der photokatalytisch aktiven Beschichtung mittelbar durch die Erzeugung von Sauerstoff-Radikalen erfolgt, die nachfolgend die Verschmutzungsstoffe bzw. Verunreinigungen oxidieren und mithin abbauen.

Die Selbstreinigungswirkung des erfindungsgemäßen keramischen Formkörpers bzw. des über das erfindungsgemäße Verfahren hergestellte grobkeramischen Formkörpers kann weiter gesteigert werden, wenn unter der photokatalytisch aktiven, porösen oxidkeramischen Beschichtung eine Oberflächenstruktur mit Erhebungen bzw. Vertiefungen angeordnet ist und/oder wenn die photokatalytisch aktive, poröse oxidkeramische Beschichtung selbst eine Oberflächenstruktur mit Erhebungen und Vertiefungen aufweist.

Es hat sich gezeigt, dass grobkeramische Oberflächenstrukturen mit Erhebungen, vorzugsweise mit einer vorgegebenen Verteilungsdichte, über eine überraschende Selbstreinigungseigenschaft verfügen. Die Erhebungen können weiterhin hydrophobiert sein, so dass die Anhaftung von hydrophilen Verschmutzungsstoffen bzw. Verunreinigungen weiter stark verringert wird.

Die Erhebungen können durch Aufbringung von partikulärem Material auf dem oxidkeramischen Basismaterial gebildet werden. Als partikuläres Material wird hierbei vorzugsweise temperaturbeständiges, gemahlenes Material verwendet, das vorzugsweise aus der Gruppe ausgewählt wird, die aus gemahlenem Gestein, Schamotte, Ton, Minerale, Keramikpulver wie SiC, Glas, Glasschamotte und Mischungen davon bestehen.

Unter temperaturbeständigem Material wird im Sinne der Erfindung verstanden, dass das Material bei einer Temperatur von vorzugsweise bis zu 1100°C, weiter bevorzugt bis zu 600°C, nicht erweicht.

Selbstverständlich kann als partikuläres Material auch $TiO_2$, $Al_2O_3$, $SiO_2$ und/oder $Ce_2O_3$ verwendet werden. Dabei haben sich Partikel mit einer Größe in einem Bereich von bis zu 1500 nm, vorzugsweise von etwa 5 nm bis etwa 700 nm, als sehr geeignet erwiesen. Weiterhin ist ein Parükelgrößenbereich von etwa 5 nm bis etwa 25 bis 50 nm sehr bevorzugt.

Bevorzugt ist, dass die Erhebungen bzw. Vertiefungen Höhen bzw. Tiefen in einem Bereich von bis zu 1500 nm, vorzugsweise von etwa 5 nm bis etwa 700 nm, weiter bevorzugt von etwa 5 nm bis etwa 25 bis 50 nm, aufweisen. Somit können die Erhebungen auch unter Aggregation oder Agglomeration von kleineren Partikeln gebildet werden.

Das partikuläre Material kann hierbei unter Verwendung von Haftmitteln an dem oxidkeramischen Basismaterial fixiert werden. Beispielsweise können als Haftmittel Polysiloxane verwendet werden, die das partikuläre Material zum einen an der Oberfläche des oxidkeramischen Basismaterials fixieren und zum anderen die hergestellte Beschichtung mit einer superhydrophoben Oberfläche versehen. Das Haftmittel, beispielsweise das Polysiloxan, wird im Schritt (a) des erfindungsgemäßen Verfahren bei der Herstellung der Suspension zugesetzt. Sofern die Hydrophobierung der Oberfläche der Beschichtung erhalten bleiben soll, darf in diesem Fall das Härten in Schritt (c) nicht bei einer Temperatur von mehr als 300°C erfolgen. Wird die Temperatur über 300°C erhöht, kann es zu einer thermischen Zersetzung des Polysiloxans und zum Abbau der superhydrophoben Oberfläche auf der photokatalytisch aktiven, porösen oxidkeramischen Beschichtung kommen.

Bei der vorliegenden Erfindung ist es jedoch nicht notwendig, Haftmittel zur Fixierung von partikulärem Material, beispielsweise von photokatalytisch aktiven, oxidkeramischen Partikeln, zu verwenden. Die Partikel können auch durch eine sinterähnliche Verbindung mit dem oxidkeramischen Basismaterial verbunden werden. Beispielsweise können die Partikel in Form einer Suspension auf das oxidkeramische Basismaterial aufgebracht und nachfolgend das Ganze auf eine Temperatur von etwa 200°C bis 500°C, vorzugsweise etwa 300°C, erwärmt werden. Die Partikel werden hierdurch zuverlässig an der Grobkeramik oder Keramik befestigt.

Bei einem Brennen des grobkeramischen Formkörpers, das üblicherweise in einem Bereich von mehr als 300°C bis etwa 1100°C durchgeführt wird, wird das zur Erzeugung von Erhebungen verwendete partikuläre Material mit einer Temperatur beaufschlagt, die zu einem oberflächlichen Erweichen der Partikeloberflächen führt, so dass sich eine sinterähnliche Verbindung zwischen dem partikulären Material und dem oxidkeramischen Basismaterial ausbildet. Hierbei können beispielsweise auch die Sintertemperatur absenkende Flussmittel zugesetzt werden.

Dem Fachmann sind aus den EP 0 909 747, EP 1 072 507 und EP 1 095 923 verschiedenartige Möglichkeiten zur Befestigung von partikulärem Material auf einer keramischen Oberfläche bekannt.

Gemäß einer bevorzugten Ausführungsform können die photokatalytisch aktiven, oxidkeramischen Materialien auch in dem oxidkeramischen Basiskörper enthalten sein.

Das photokatalytisch aktive, oxidkeramische Material in der Beschichtung und optional in dem oxidkeramischen Basismaterial umfasst $TiO_2$, $Al_2O_3$ und $SiO_2$ wahlweise in Kombination mit weiteren oxidkeramischen Materialien.

Als Titandioxid wird hierbei vorzugsweise Titandioxid mit Anatas-Struktur verwendet. Als Aluminiumoxid wird Aluminiumoxid C verwendet, das kristallographisch der δ-Gruppe zuzuordnen ist und über eine starke oxidationskatalytische Wirkung verfügt.

Geeignetes Aluminiumoxid C ist bei der Degussa AG, Deutschland, erhältlich. Beispielsweise hat sich AEROSIL COK 84, eine Mischung von 84 % AEROSIL 200 und 16 % Aluminiumoxid C, als sehr verwendbar bei der vorliegenden Erfindung erwiesen.

Bei Verwendung von $TiO_2$ in der oxidkeramischen Beschichtung ist bevorzugt, dass das $TiO_2$ wenigstens teilweise in der Anatas-Struktur, vorzugsweise zu wenigstens 40 Gew.-%, bevorzugt zu wenigstens 70 Gew.-%, weiter bevorzugt zu wenigstens 80 Gew.-%, bezogen auf die Gesamtmenge an $TiO_2$, vorliegt.

Als sehr geeignet hat sich $TiO_2$ erwiesen, das in einer Mischung aus etwa 70 - 100 Gew.% Anatas bzw. etwa 30 - 0 Gew.-% Rutil vorliegt.

Gemäß einer weiteren bevorzugten Weiterbildung der Erfindung liegt das $TiO_2$ zu etwa 100 % in der Anatas-Struktur vor.

Vorzugsweise wird das bei der vorliegenden Erfindung verwendete $TiO_2$ durch Flammenhydrolyse von $TiCl_4$ als hochdisperses $TiO_2$ erhalten, welches vorzugsweise eine Partikelgröße von etwa 15 nm bis 30 nm, vorzugsweise 21 nm aufweist.

Beispielsweise kann hierfür das unter der Bezeichnung Titandioxid P 25 von der Degussa AG, Deutschland erhältliche Titandioxid verwendet werden, das aus einem Anteil von 70 % Anatasform und 30 % Rutil besteht. Äußerst vorteilhaft absorbiert Titandioxid in der Anatasform UV-Licht mit Wellenlängen von kleiner als 385 nm. Rutil absorbiert UV-Licht mit einer Wellenlänge von kleiner als 415 nm.

Eine mit $TiO_2$-Partikeln beschichtete Oberfläche einer erfindungsgemäßen Grobkeramik, vorzugsweise eines Dachziegels, weist nach 15-stündiger Bestrahlung mit 1 mW/cm$^2$ UV-A Schwarzlicht, was etwa 30 % der solaren Bestrahlungsstärke an einem klaren Sommertag entspricht, eine superhydrophile Oberfläche auf.

Ein Maß für die Superhydrophilie ist der Kontaktwinkel eines Wassertropfens mit einem definierten Volumen (hier 10 μl). Dieser Tropfen wird mit der zu untersuchenden Oberfläche in Kontakt gebracht und im zeitlichen Abstand von einer Sekunde fotografiert. Anschließend wird für jede Aufnahme sowohl der linke als auch der rechte Kontaktwinkel zwischen Tropfen und Oberfläche berechnet. Die nachfolgenden Werte sind jeweils der Mittelwert zwischen den errechneten Kontaktwinkeln.

Zunächst wurden für einen Vergleichsdachziegel ohne $TiO_2$-Partikel-Beschichtung und zwei nicht erfindungsgemäße Dachziegel A und B mit $TiO_2$-Partikel-Beschichtung die Kontaktwinkel ermittelt. Nachfolgend wurden die drei Dachziegel für 15 Stunden mit 1 mW/cm$^2$ UV-A Schwarzlicht bestrahlt. Die jeweils bestimmten Kontaktwinkel sind in Tabelle 1 angegeben:

**Tabelle 1: Kontaktwinkel**

| Dachziegel | Kontaktwinkel nach 0 h Bestrahlung | Kontaktvirinkel nach 15 h Bestrahlung |
|---|---|---|
| Dachziegel A | 19,2° | 4,0° |
| Dachziegel B | 18,4° | < 4,0° |
| Vergleichs-Dachziegel | 29,8° | 27,3° |

Nach einer Bestrahlungszeit von 15 Stunden wurden die Dachziegel A und B über einen Zeitraum von 30 Tagen unter Dunkelheit aufbewahrt. Die nach 30 Tagen Dunkelheit bestimmten Kontaktwinkel sind in Tabelle 2 angegeben:

**Tabelle 2: Kontaktwinkel nach 30 Tagen Dunkelheit**

| Dachziegel | Kontaktwinkel nach 30 Tagen Dunkelheit |
|---|---|
| Dachziegel A | 17,1° |
| Dachziegel B | 13,6° |

Nach 30 Tagen Dunkelheit wurden die Dachziegel A und B für einen Zeitraum von 3 Stunden erneut mit 1 mW/cm$^2$ UV-A Schwarzlicht bestrahlt. Die im Anschluss an die Bestrahlung gemessenen Kontaktwinkel sind in Tabelle 3 angegeben.

**Tabelle 3: Kontaktwinkel nach erneuter Bestrahlung für 3 Stunden**

| Dachziegel . | Kontaktwinkel nach erneuter Bestrahlung für 3 h |
|---|---|
| Dachziegel A | 6,7° |
| Dachziegel B | 7,3° |

Die in Tabelle 1 angegebenen Daten zeigen, daß die mit TiO$_2$-Partikeln beschichteten Dachziegel nach Bestrahlung mit UV-Licht eine äußerst hydrophile bzw. superhydrophile Oberfläche aufweisen. Die hydrophilen Eigenschaften verschlechtern sich, was an einer Zunahme des Kontaktwinkels erkennbar ist, wenn die Dachziegel über einen längeren Zeitraum in Dunkelheit gelagert werden (siehe Tabelle 2). Aus Tabelle 3 ist ersichtlich, daß die superhydrophile Eigenschaft bereits nach kurzzeitiger Bestrahlung mit UV-Licht, die in etwa einer Stunde in der Frühlingssonne entspricht, wieder zurückkehrt. Superhydrophile Oberflächen können leicht mit Wasser, beispielsweise Regenwasser, gereinigt werden.

Gemäß einer bevorzugten Ausführungsform der Erfindung beträgt der Kontaktwinkel eines 10 µl Wassertropfens auf einer Grobkeramik ohne hydrophobe Nachbeschichtung nach 15 Stunden Bestrahlung mit 1 mW/cm$^2$ UV-A Schwarzlicht vorzugsweise weniger als 6° bis 7°, vorzugsweise weniger als 5°, weiter bevorzugt weniger als 4°.

Gemäß einer bevorzugten Ausführungsform der Erfindung beträgt der Kontaktwinkel eines 10 µl Wassertropfens auf einer Grobkeramik ohne hydrophobe Nachbeschichtung nach 15 Stunden Bestrahlung mit 1 mW/cm$^2$ UV-A Schwarzlicht und 30 Tagen Dunkelheit vorzugsweise weniger als 20°, vorzugsweise weniger als 18°, weiter bevorzugt weniger als 14°.

Gemäß einer bevorzugten Ausführungsform der Erfindung beträgt der Kontaktwinkel eines 10 µl Wassertropfens auf einer erfindungsgemäßen Grobkeramik ohne hydrophobe Nachbeschichtung nach 15 Stunden Bestrahlung mit 1 mW/cm$^2$ und 30 Tagen Dunkelheit und erneuter Bestrahlung mit vorzugsweise 1 mW/cm$^2$ UV-A Schwarzlicht für drei Stunden weniger als 8, vorzugsweise weniger als 7°.

Die photokatalytische Aktivität kann dabei nach mehreren Verfahren bestimmt werden.

1. Abbau von Methanol zu Formaldehyd

Die Bestimmung der photokatalytischen Aktivität erfolgt bei diesem Verfahren in Anlehnung an das in GIT Labor-Fachzeitschrift 12/99, Seiten 1318 bis 1320 beschriebenen Verfahren, wobei Methanol zu Formaldehyd oxidiert wird.

Hierbei wird eine Materialprobe von einem Dachziegel entnommen und mit Methanol in Kontakt gebracht. Die Materialprobe wurde für 7 Minuten mit UV-Licht (Quecksilberhochdrucklampe, Heraeus) mit einer Wellenlänge von 300 bis 400 nm bestrahlt, um die Umwandlung von Methanol zu Formaldehyd zu katalysieren.

Nach der Bestrahlung wurde aus dem Überstand ein Aliquot entnommen und mit 3-Methyl-2-benzothiazolinonhydrazon-Hydrochlorid-Hydrat (Reaktionslösung) versetzt und für 100 Minuten bei Zimmertemperatur geschüttelt. Nach Derivatisierung des Formaldehyds mit dem Farbstoff wurde die Konzentration des Derivats mit einem UV-VIS-Spektrometer (Absorptionsbande bei 635 nm), d.h. die Dämpfung bestimmt. Die Dämpfung ist ein Maß für die photokatalytische Aktivität des Probenkörpers.

Eine Blindmessung wurde mit einer Probe eines unbeschichteten Dachziegels durchgeführt, um Effekte zweiter Ordnung, wie Abbaureaktionen durch eingelagerte Verunreinigungen, auszuschließen.

Sämtliche Materialproben weisen eine identische Reaktionsfläche auf. Durch Vergleichsuntersuchung verschiedener Materialproben mit der gleichen Reaktionsfläche und der gleichen Methanolkonzentration kann eine Eichung erfolgen.

Die Differenzbildung der erhaltenen Messwerte, d.h. Messwert Dämpfung der Materialprobe mit partikulärer $TiO_2$-Beschichtung abzüglich des Messwertes der Vergleichsprobe ohne partikuläre $TiO_2$-Beschichtung, ergibt einen Wert, der ein direktes Maß für die photokatalytische Aktivität der Materialprobe mit der partikulären $TiO_2$-Beschichtun ist.

Zu Vergleichszwecken wurde die Beschichtung Aktiv Clean auf eine Glasscheibe nach dem Toto-Verfahren aufgebracht. Die Dämpfung der Reaktionslösung lag bei 0,085 bis 0,109.

Gemäß einer bevorzugten Ausführungsform der Erfindung führt der erfindungsgemäße Formkörper bei der Reaktionslösung zu einer Dämpfung von 0,020 bis 0,500, vorzugsweise von 0,100 bis 0,250, weiter vorzugsweise von 0,110 bis 0,150.

2. Abbau von Methylenblau

Bei diesem Verfahren zur Bestimmung der photokatalytischen Aktivität wird die Abbaurate von Methylenblau in Lösung bestimmt.

Zunächst werden Materialproben von Dachziegeln mit einer Adsorptionslösung von 0,02 mM Methylenblau (in Wasser) in Kontakt gebracht und die so behandelten Materialproben für 12 Stunden in Dunkelheit verwahrt. Die Absorptionsspektren werden vor und nach der 12-stündigen Dunkelphase bei einer Wellenlänge von 663 nm gemessen.

Nachfolgend wird die Adsorptionslösung durch eine 0,01 mM Methylenblaulösung (in Wasser) ersetzt und das Ganze für drei Stunden mit 1 mW/cm$^2$ UV-A Schwarzücht bestrahlt. Die bestrahlte Fläche sind 10,75 cm$^2$ und das bestrahlte Volumen der Methylenblaulösung sind 30 ml. Über den Bestrahlungszeitraum (3 Stunden) wurde alle 20 Minuten ein Aliquot entnommen und der Absorptionswert bei einer Wellenlänge von 663 nm bestimmt. Unter Verwendung einer Eichkurve (Absorptionswerte von Lösungen mit bekannter Methylenblaukonzentrationen) läßt sich die Abbaurate von Methylenblau bestimmen (Steigung der Meßkurve in einem Methylenblaukonzentration-gegen-Bestrahlungszeit-Diagramm).

Aufgrund der großen inneren Oberfläche der Dachziegel wurden die Materialproben während der Adsorption als auch während der Bestrahlung konstant feucht gehalten, um ein Aufsaugen der Methylenblaulösungen zu vermeiden.

Zu Vergleichszwecken wurden die Versuche mit unbeschichteten Materialproben durchgeführt.

Aus dem Photonenfluß ($\lambda$=350 nm; 10,75 cm$^2$ bestrahlte Fläche; 1 mW/cm$^2$) von 1,13 x 10$^{-4}$ mol Photonenenergie/h läßt sich die Photoneneffizienz $\xi$ berechnen:

$$\xi\ [\%] = \text{Abbaurate [mol/h] / Photonenfluß [mol Photonenenergie/h]}$$

Von dem erhaltenen Wert wird, um Adsorptionseffekte auszuschließen, ein Korrekturfaktor subtrahiert. Der Korrekturfaktor wird bestimmt, indem - nach der 12-stündigen Adsorptionszeit mit der 0,02 mM Methylenblaulösung) - die Materialprobe für drei Stunden mit 0,01 mM Methylenblaulösung in Dunkelheit in Kontakt gebracht wird. Am Ende dieser dreistündigen Inkubation wird der Absorptionswert bei 663 nm bestimmt, der ein Maß für den Abbau von Methylenblau durch Sekundärreaktionen ist. Dieser Wert stellt den Korrekturfaktor dar, der umgerechnet in eine fiktive Photoneneffizienz, von der oben berechneten Photoneneffizienz subtrahiert wird.

Gemäß einer bevorzugten Ausführungsform der Erfindung beträgt die - aus dem photokatalytisch induzierten Methylenblau-Abbau - berechnete Photoneneffizienz bei der erfindungsgemäßen Grobkeramik wenigstens 0,015 %, vorzugsweise wenigstens 0,02 %, weiter vorzugsweise wenigstens 0,03 %, noch weiter bevorzugt wenigstens 0,04 %.

3. Abbau von Methylstearat

Auf Materialproben von Dachziegeln und Vergleichsziegeln wurde eine definierte Menge einer 10 mM Methylstearat / n-Hexan-Lösung aufgebracht und für 17 Stunden mit 1 mW/cm$^2$ UV-A Schwarzlicht bestrahlt.

Nach Abschluss der Bestrahlung wurde das auf den Materialproben verbliebene Metylstearat mit einem definierten Volumen von 5 ml n-Hexan abgewaschen und mittels Gaschromatographie (FID) bestimmt und quantifiziert. Aus diesem Wert läßt sich die Abbaurate in mol/h berechnen.

Bei einem Photonenfluß ($\lambda$=350 nm, 36 cm$^2$ bestrahlte Fläche, 1 mW/cm$^2$) von 3,78 x 10$^{-4}$ mol Photonenenergie/h läßt sich in Verbindung mit der bestimmten Abbaurate in Entsprechung zu dem Methylenabbau (siehe oben Punkt 2) die Photoneneffizienz $\xi$ berechnen. Eine Korrektur der erhaltenen Werte ist nicht notwendig, da bei dem Vergleichsprobenmaterial (Dachziegel ohne $TiO_2$-Beschichtung) kein Abbau von Methylstearat erfolgte.

Gemäß einer bevorzugten Ausführungsform der Erfindung beträgt die - aus dem photokatalytisch induzierten Methylstearat-Abbau - berechnete Photoneneffizienz bei der Grobkeramik wenigstens 0,05 %, vorzugsweise wenigstens 0,06 %, weiter vorzugsweise wenigstens 0,07 %, noch weiter bevorzugt wenigstens 0,08 %, bevorzugt 0,10 %.

Es hat sich gezeigt, dass die Selbstreinigungseigenschaft der Oberfläche deutlich verbessert werden kann, wenn die photokatalytisch aktive, poröse oxidkeramische Beschichtung mit einer hydrophoben, vorzugsweise superhydrophoben Oberfläche versehen wird. Die oxidierten organischen Verschmutzungsstoffe werden noch leichter durch Beregnung oder Berieselung mit Wasser von der Oberfläche heruntergespült.

Unter hydrophober Oberfläche wird in dem Sinne der Erfindung eine Oberfläche verstanden, die im allgemeinen wasserabstoßend ist.

Gemäß einer bevorzugten Weiterbildung weist der erfindungsgemäße grobkeramische Formkörper eine superhydrophobe Oberfläche auf.

Unter einer superhydrophoben Oberfläche wird im Sinne der Erfindung eine Oberfläche mit einem Kontakt- oder Randwinkel von wenigstens 140° für Wasser verstanden. Der Randwinkel kann an einem auf eine Oberfläche gegebenen Wassertropfen mit einem Volumen von 10 $\mu$l auf herkömmliche Art und Weise bestimmt werden. Vorzugsweise beträgt der Kontakt- oder Randwinkel wenigstens 150°, weiter bevorzugt 160°, noch weiter bevorzugt wenigstens 170°.

Die photokatalytisch aktive, poröse oxidkeramische Beschichtung kann unter Verwendung von einer oder mehreren Verbindungen mit geradkettigen und/oder verzweigtkettigen aromatischen und/oder aliphatischen Kohlenwasserstoffresten mit funktionellen Gruppen hydrophobiert werden, wobei die funktionellen Gruppen aus Amin, Thiol, Carboxylgruppe, Alkohol, Disulfid, Aldehyd, Sulfonat, Ester, Ether oder Mischungen davon ausgewählt werden. Vorzugsweise werden Silikonöl, Aminöle, Silikonharz, z.B. Alkylpolysiloxane, Alkoxysiloxane, Alkalisiliconate, Erdalkalisiliconate, Silan-Siloxan-Gemische, Aminosäuren oder Gemische davon verwendet.

Vorzugsweise kann die Beschichtung aus Ormoceren, Polysiloxan, Alkylsilan und/oder Fluorsilan, vorzugsweise in Mischung mit $SiO_2$, gebildet sein. Die gerad- und/oder verzweigtkettigen Kohlenwasserstoffreste bestehen vorzugsweise aus 1 bis 30 C-Atomen, weiter bevorzugt 6 bis 24 C-Atomen, bspw. 16 bis 18 C-Atomen.

Vorzugsweise wird eine Mischung aus Alkalisiliconaten und/oder Erdalkalisiliconaten in Wasser aufgebracht, wobei Alkali aus der Gruppe ausgewählt wird, die aus Li, Na, K und Gemischen davon besteht. Erdalkali werden vorzugsweise aus der Gruppe ausgewählt, die aus Be, Mg, Ca, Sr, Ba und Gemischen davon besteht. Bevorzugte Verdünnungen von Alkali- oder Erdalkali-Siliconat zu Wasser liegen im Bereich von 1 : 100 bis 1 : 600 (Gew./Gew.), weiter bevorzugt sind Verdünnungen von 1 : 250 bis 1 : 350 (Gew./Gew.).

Für die Bereitstellung einer superhydrophoben Oberfläche kann eine Mischung aus Partikeln, z.B. $SiO_2$, und Hydrophobierungsmittel, z.B. Fluorsilan, aufgebracht werden. Diese Superhydrophobierung verstärkt äußerst vorteilhaft die Selbstreinigungseigenschaft des erfindungsgemäßen Formkörpers.

Gemäß einer weiteren bevorzugten Ausführungsform weist die superhydrophobe Oberfläche Erhebungen auf. Diese Erhebungen können bei Aufbringung des Hydrophobierungsmittels erzeugt werden, indem dem Hydrophobierungsmittel partikuläres Material zugemischt wird und diese Mischung nachfolgend auf die photokatalytisch aktive, poröse oxidkeramische Beschichtung aufgebracht wird.

Wenn die Oberfläche mit den vorstehend angegebenen Hydrophobierungsmitteln hydrophobiert ist, darf die Temperatur nicht über 300°C erhöht werden, da es dann zu der bereits oben erwähnten thermischen Zersetzung der Hydrophobierungsmittel kommen kann.

Im Sinne der Erfindung erfolgt daher ein Härten durch Brennen nur dann, wenn noch keine hydrophobe Oberfläche auf der photokatalytisch aktiven, porösen oxidkeramischen Beschichtung aufgebracht wurde. Wurde Polysiloxan als Haftmittel verwendet und nachfolgend der Formkörper durch Brennen gehärtet, muss regelmäßig die Oberfläche noch einmal hydrophobiert werden, wenn eine hydrophobe Oberfläche auf der photokatalytisch aktiven, porösen oxidkeramischen Beschichtung bereitgestellt werden soll.

Der grobkeramische Formkörper liegt als Dachziegel, Ziegel, Klinker oder Fassadenwand vor.

Bei der erfindungsgemäßen Herstellung eines grobkeramischen Formkörpers liegt das in Schritt (a) verwendete photokatalytisch aktive, oxidkeramische Pulver vorzugsweise in einer nanodispersen Form vor. Hierbei hat sich der Partikelgrößenbereich des oxidkeramischen Pulvers in einem Bereich von 5 nm bis etwa 100 nm, weiter bevorzugt von etwa 10 nm bis etwa 50 nm, als sehr geeignet erwiesen.

Zur Herstellung des erfindungsgemäßen grobkeramischen Formkörpers wird aus oxidkeramischem Pulver, anorganischem Stabilisierungsmittel sowie einer Flüssigphase unter Mischen eine bevorzugt homogene Suspension bereitgestellt. Diese Suspension kann in einer gewünschten Schichtdicke auf das oxidkeramische Basismaterial aufgebracht werden.

Die Suspension kann beispielsweise durch Gießen, Streichen, Sprühen, Schleudern, etc. auf das oxidkeramische Basismaterial aufgebracht werden. Selbstverständlich kann das oxidkeramische Basismaterial auch in die Suspension eingetaucht werden.

Vorzugsweise wird die Suspension in einer solchen Schichtdicke aufgebracht, dass nach dem Trocknen und/oder Brennen ein grobkeramischer Formkörper mit einer photokatalytisch aktiven, porösen oxidkeramischen Beschichtung in einer Dicke von etwa 50 nm bis etwa 50 μm, vorzugsweise etwa 100 nm bis etwa 1 μm, erhalten wird.

Dabei bildet sich die Schicht nicht nur in den Poren bzw. Kapillaren der Oberfläche, sondern auch auf der Oberfläche des grobkeramischen Formkörpers aus. Auf diese Weise können partiell Schichtdicken der oxidkeramischen Beschichtung ausgebildet sein, die größer als der mittlere Durchmesser der Poren bzw. Kapillaren sind, die üblicherweise in einem Bereich von 0,1 μm bis 5 μm liegen.

Bei dem oxidkeramischen Basismaterial kann es sich um einen Grünkörper (ungebranntes Keramikmaterial) oder um vorgebranntes oder gebranntes Keramikmaterial handeln. Das oxidkeramische Basismaterial weist vorzugsweise ein Wasseraufnahmevermögen von > 1 %, vorzugsweise von 2 bis 12% auf.

Das in Schritt (a) verwendete anorganische Stabilisierungsmittel stabilisiert die photokatalytisch aktiven, oxidkeramischen Pulverpartikel in der Suspension, so dass die photokatalytisch aktiven, oxidkeramischen Pulverpartikel nicht ausfallen.

Vorzugsweise wird als anorganisches Stabilisierungsmittel $SiO_2$, $SnO_2$, $\gamma$-$Al_2O_3$, $ZrO_2$ oder Gemische davon verwendet.

Das anorganische Stabilisierungsmittel verringert die Agglomerationsneigung der photokatalytisch aktiven, oxidkeramischen Pulverpartikel bzw. Partikel in der Suspension. Dies ermöglicht eine gleichmäßige Aufbringung und Verteilung der Pulverpartikel auf der Oberfläche einer Grobkeramik oder Keramik. Aufgrund der verringerten Agglomeratbildung kommt es letztendlich zu einer erhöhten photokatalytischen Aktivität der Beschichtung nach Aufbringung auf das oxidkeramische Basismaterial.

Das Brennen der in Schritt (b) bereitgestellten Schicht kann zum einen durch Brennen des Formkörpers in einem Brennofen oder in einer Brennkammer bei einer Temperatur von mehr als 300 °C bis etwa 1100 °C erfolgen. Weiterhin erfolgt das Brennen vorzugsweise in einem Temperaturenbereich von etwa 700 °C bis etwa 1100 °C.

Das Trocknen erfolgt bei einer wesentlich tieferen Temperatur als das Brennen. Das Trocknen erfolgt üblicherweise in einem Temperaturbereich von 50 °C bis 300 °C, vorzugsweise von 80 °C bis 100 °C. In diesem Temperaturbereich wird eine aufgebrachte superhydrophobe Beschichtung nicht zerstört bzw. abgebaut.

Bei der optionalen Verwendung von Haftmittel bei Schritt (a) wird der Suspension vorzugsweise Polysiloxan zugesetzt, das die Haftung des oxidkeramischen Pulvers an dem oxidkeramischen Basismaterial unterstützt. Polysiloxan führt neben seiner Haftwirkung auch zu einer Hydrophobierung der Struktur. Darüber hinaus bewirkt das Zusetzen von Haftmittel, wie beispielsweise Polysiloxan, auch eine Erhöhung der Viskosität der in Schritt (a) des erfindungsgemäßen Verfahrens hergestellten Suspension. Somit muss bei einem Zusetzen von Haftmittel zu der Suspension in Schritt (a) nicht notwendigerweise ein Stellmittel zugegeben werden. Die unter Verwendung von Haftmittel eingestellte Viskosität kann ausreichen, so dass in Schritt (b) die Suspension auf dem oxidkeramischen Basismaterial unter Ausbildung einer Schicht aufgebracht werden kann.

Als Flüssigphase werden vorzugsweise wässrige Lösungen und/oder Wasser enthaltende Lösungen verwendet. Weiter bevorzugt wird als Flüssigphase Wasser verwendet.

Bei einer weiteren erfindungsgemäßen Ausgestaltung des Verfahrens kann der in Schritt (a) hergestellten Suspension auch partikuläres Material zugesetzt werden. Bei dieser Verfahrensvariante werden in einem Schritt die für den Selbstreinigungseffekt der Oberfläche vorteilhaften Erhebungen als auch die katalytisch aktive, poröse oxidkeramische Beschichtung ausgebildet.

Bei einem gemäß dieser Verfahrensvariante hergestellten grobkeramischen Formkörper liegt dann kein getrennter Schichtaufbau aus Schicht mit Erhebungen und darüber angeordneter katalytisch aktiver, poröser oxidkeramischer Beschichtung vor. Vielmehr liegen die unter Verwendung von partikulärem Material hergestellten Erhebungen und die photokatalytisch aktiven oxidkeramischen Komponenten im wesentlichen nebeneinander bzw. miteinander innig vermischt vor.

Wahlweise kann dieser Suspension dann auch noch ein Hydrophobierungsmittel zugegeben werden, so dass die Superhydrophobierung der oxidkeramischen Oberfläche in dem gleichen Verfahrensschritt erfolgt.

Eine Superhydrophobierung wird erhalten, wenn die Oberfläche hydrophobiert ist und gleichzeitig Erhebungen und Vertiefungen, die beispielsweise unter Zusatz von partikulärem Material erzeugt sind, umfaßt.

Bei dieser Verfahrensvariante darf das Härten dann nur durch Trocknen erfolgen, damit keine thermische Zersetzung der hydrophoben Oberfläche eintritt.

Selbstverständlich ist es auch möglich, zunächst auf dem oxidkeramischen Basismaterial das oben genannte partikuläre Material zur Erzeugung von Erhebungen aufzubringen und mittels Haftmittel und/oder Sinterung an der Oberfläche des keramischen Basismaterials zu fixieren, diese so bereitgestellte, Erhebungen aufweisende Oberfläche unter Verwendung des erfindungsgemäßen Verfahrens mit einer photokatalytisch aktiven, porösen oxidkeramischen Beschichtung zu versehen und gegebenenfalls nachfolgend eine superhydrophobe Oberfläche auf der photokatalytisch aktiven Beschichtung zu erzeugen.

Als Hydrophobierungsmittel werden vorzugsweise anorganisch-organische Hybridmoleküle wie beispielsweise Siloxane, insbesondere Polysiloxane, verwendet. Weiterhin haben sich als Hydrophobierungsmittel Ormocere, Alkylsilane und/oder Fluorsilane als geeignet erwiesen.

Selbstverständlich können aber auch andere Hydrophobierungsmittel, beispielsweise Alkali- oder Erdalkalisiliconate, verwendet werden, wie sie beispielsweise oben angegeben sind.

Die Hydrophobierungsmittel können durch ein geeignetes Verfahren, beispielsweise Sprühen, Gießen, Schleudern, Bestreuen etc. aufgebracht werden. Beispielsweise kann unter Verwendung einer, bevorzugt wässrigen, Flüssigphase zunächst eine Hydrophobierungslösung oder-suspension hergestellt werden. Dieser Hydrophobierungslösung oder -suspension können wahlweise noch partikuläre Materialien zugesetzt werden, wenn in der superhydrophoben Oberfläche Erhebungen erzeugt werden sollen. Diese Hydrophobierungslösung oder -suspension kann dann auf die oben beschriebene herkömmliche Art und Weise aufgebracht werden.

Unter einer superhydrophoben Oberfläche wird im Sinne der Erfindung eine superhydrophobe Schicht verstanden, wobei der Randwinkel für Wasser wenigstens 140°, vorzugsweise 160°, weiter bevorzugt 170°, beträgt.

Weiterhin kann nach Aufbringung der in Schritt (a) hergestellten Suspension auf das oxidkeramische Basismaterial vor dem Brennen auch ein Vortrocknungsschritt durchgeführt werden. Bei diesem Vortrocknungsschritt kann die Flüssigphase, vorzugsweise Wasser, durch Verflüchtigung entfernt werden. Dies kann beispielsweise durch Erwärmung, beispielsweise in einem Umluftofen oder Strahlungsofen erfolgen. Selbstverständlich können auch andere Trocknungsverfahren, beispielsweise Mikrowellentechnik, verwendet werden.

Der Vortrocknungsschritt hat sich als vorteilhaft erwiesen, um eine Rißbildung bzw. ein Reißen der aus der Suspension entstehenden Beschichtung beim Brennen zu vermeiden. Nach dem Brennen kann dann eine superhydrophobe Oberfläche auf die vorstehend beschriebene Art und Weise aufgebracht werden.

Nach dem Brennschritt und der gegebenenfalls durchgeführten Hydrophobierung kann bei einer bevorzugten Ausführungsform eine Nachbehandlung der hergestellten photokatalytisch aktiven, porösen oxidkeramischen Beschichtung durchgeführt werden. Die Nachbehandlung erfolgt durch Einstrahlung von Laserlicht, NIR- oder UV-Licht. Durch diese Nachbehandlung kann die Haftung zwischen der photokatalytisch aktiven Beschichtung und dem oxidkeramischen Basismaterial verbessert werden.

Es hat sich gezeigt, dass der erfindungsgemäße grobkeramische Formkörper neben einer verbesserten Selbstreinigungseigenschaft eine verbesserte mechanische Stabilität besitzt. Äußerst vorteilhaft haftet die katalytisch aktive, poröse oxidkeramische Beschichtung mit gegebenenfalls superhydrophober Oberfläche sehr fest und zuverlässig an bzw. in dem grobkeramischen Basismaterial. Somit wird diese Beschichtung, wenn sie beispielsweise auf Dachziegeln aufgebracht ist, nicht bei einem Begehen des Daches abgerieben oder zerstört. Insbesondere ist die in den Poren bzw. dem Kapillargefüge aufgebrachte Beschichtung vor mechanischen Einwirkungen zuverlässig geschützt.

**Patentansprüche**

1. Keramischer Formkörper, nämlich ein Dachziegel, Ziegel, Klinker oder eine Fassadenwand, aus oxidkeramischem Basismaterial mit Kapillargefüge und mit bei Beregnung oder Berieselung mit Wasser selbstreinigender Oberfläche, **dadurch gekennzeichnet,**
dass der Formkörper eine poröse oxidkeramische Beschichtung aufweist,
wobei die Beschichtung photokatalytisch aktiv ist und die photokatalytisch aktiven, oxidkeramischen Materialien $TiO_2$, $Al_2O_3$ und $SiO_2$ umfaßt, wobei das $Al_2O_3$ Aluminiumoxid C ist, und eine spezifische Oberfläche in einem Bereich von 25 $m^2$/g bis 200 $m^2$/g, vorzugsweise von 40 $m^2$/g bis 150 $m^2$/g, aufweist.

2. Keramischer Formkörper nach Anspruch 1,
**dadurch gekennzeichnet,**
dass das oxidkeramische Basismaterial ein Kapillargefüge aufweist und die poröse oxidkeramische Beschichtung auf der Oberfläche und in den Porenöffnungen sowie den freien Flächen des Kapillargefüges nahe der Oberfläche im inneren des keramischen Formkörpers aufgebracht ist.

3. Keramischer Formkörper nach Anspruch 1,
**dadurch gekennzeichnet,**
dass die Porenöffnungen intergranular und/oder intragranular ausgebildet sind.

4. Keramischer Formkörper nach einem der Ansprüche 1 bis 3,
**dadurch gekennzeichnet,**
dass der freie Atmungsquerschnitt des keramischen Formkörpers durch die aufgebrachte poröse oxidkeramische Beschichtung um weniger als 10 %, vorzugsweise weniger als 5 %, bezogen auf den freien Atmungsquerschnitt eines nicht beschichteten keramischen Formkörpers, herabgesetzt ist.

5. Keramischer Formkörper nach einem der Ansprüche 1 bis 4,

**dadurch gekennzeichnet,**
**dass** die poröse oxidkeramische Beschichtung bis zu einer Tiefe von 1 mm, vorzugsweise bis zu einer Tiefe von 2 mm, gemessen in vertikaler Richtung von der Oberfläche des keramischen Formkörpers, in dem keramischen Formkörper aufgebracht ist.

6. Keramischer Formkörper nach einem der vorhergehenden Ansprüche,
   **dadurch gekennzeichnet,**
   **dass** die Beschichtung eine spezifische Oberfläche in einem Bereich von 40 m$^2$/g bis 100 m$^2$/g aufweist.

7. Keramischer Formkörper nach einem der vorhergehenden Ansprüche,
   **dadurch gekennzeichnet,**
   **dass** die mittlere Schichtdicke der Beschichtung in einem Bereich von 50 nm bis 50 $\mu$m, vorzugsweise von 100 nm bis 1 $\mu$m, liegt.

8. Keramischer Formkörper nach einem der vorhergehenden Ansprüche,
   **dadurch gekennzeichnet,**
   **dass** zwischen oxidkeramischem Basismaterial und photokatalytisch aktiver, poröser oxidkeramischer Beschichtung wenigstens eine Schicht mit Erhebungen angeordnet ist, das oxidkeramische Basismaterial Erhebungen aufweist und/oder die photokatalytisch aktive, poröse oxidkeramische Beschichtung als Schicht mit Erhebungen ausgebildet ist.

9. Keramischer Formkörper nach Anspruch 8,
   **dadurch gekennzeichnet,**
   **dass** die Erhebungen durch an dem oxidkeramischen Basismaterial fixiertes partikuläres Material gebildet sind.

10. Keramischer Formkörper nach Anspruch 9,
    **dadurch gekennzeichnet,**
    **dass** das partikuläre Material temperaturbeständiges gemahlenes Material ist, das vorzugsweise aus der Gruppe ausgewählt wird, die aus gemahlenem Gestein, Schamotte, Ton, Minerale, Keramikpulver wie SiC, Glas, Glasschamotte und Mischungen davon besteht.

11. Keramischer Formkörper nach Anspruch 9 oder 10,
    **dadurch gekennzeichnet,**
    **dass** die Größe der Partikel und/oder der Erhebungen in einem Bereich von bis zu 1500 nm, vorzugsweise von 5 nm bis 700 nm, weiter vorzugsweise von 5 nm bis 50 nm, liegt bzw. liegen.

12. Keramischer Formkörper nach einem der vorhergehenden Ansprüche,
    **dadurch gekennzeichnet,**
    **dass** das oxidkeramische Basismaterial des Formkörpers photokatalytisch aktive, oxidkeramische Materialien enthält, die aus der Gruppe ausgewählt werden, die aus $TiO_2$, $Al_2O_3$, $SiO_2$, und Mischungen davon besteht.

13. Keramischer Formkörper nach einem der vorhergehenden Ansprüche,
    **dadurch gekennzeichnet,**
    **dass** das photokatalytisch aktive, oxidkeramische Material eine durchschnittliche Partikelgröße im Bereich von 5 nm bis 100 nm, vorzugsweise von 10 nm bis 50 nm, aufweist.

14. Keramischer Formkörper nach einem der vorhergehenden Ansprüche,
    **dadurch gekennzeichnet,**
    **dass** das in der photokatalytisch aktiven, porösen oxidkeramischen Beschichtung und/oder in dem oxidkeramischen Basismaterial enthaltene $TiO_2$ wenigstens teilweise, vorzugsweise zu wenigstens 40 Gew.-%, bezogen auf die Gesamtmenge an $TiO_2$, in der Anatas-Struktur vorliegt.

15. Keramischer Formkörper nach einem der vorhergehenden Ansprüche,
    **dadurch gekennzeichnet,**
    **dass** das in der photokatalytisch aktiven, porösen oxidkeramischen Beschichtung und/oder in dem oxidkeramischen Basismaterial enthaltene $TiO_2$ zu wenigstens 70 Gew.-%, bezogen auf die Gesamtmenge an $TiO_2$, in der Anatas-Struktur vorliegt.

**16.** Keramischer Formkörper nach einem der vorhergehenden Ansprüche,
**dadurch gekennzeichnet,**
**dass** das TiO$_2$ in einer Mischung aus 70 bis 100 Gew.-% Anatas und 30 bis 0 Gew.-% Rutil vorliegt.

**17.** Keramischer Formkörper nach einem der vorhergehenden Ansprüche
**dadurch gekennzeichnet,**
**dass** das TiO$_2$ zu etwa 100 Gew.% in der Anatas-Struktur vorliegt.

**18.** Keramischer Formkörper nach einem der Ansprüche 1 bis 17,
**dadurch gekennzeichnet,**
**dass** der Kontaktwinkel eines 10 µl Wassertropfens auf der porösen oxidkeramischen Beschichtung ohne hydrophobe Nachbeschichtung nach 15 Stunden Bestrahlung mit 1 mW/cm$^2$ UV-A Schwarzlicht weniger als 7°, vorzugsweise weniger als 5°, weiter bevorzugt weniger als 4°, beträgt.

**19.** Keramischer Formkörper nach einem der Ansprüche 1 bis 18,
**dadurch gekennzeichnet,**
**dass** der Kontaktwinkel eines 10 µl Wassertropfens auf der porösen oxidkeramischen Beschichtung ohne hydrophobe Nachbeschichtung nach 15 Stunden Bestrahlung mit 1 mW/cm$^2$ UV-A Schwarzlicht und 30 Tagen Dunkelheit weniger als 20°, vorzugsweise weniger als 18°, weiter bevorzugt weniger als 14° beträgt.

**20.** Keramischer Formkörper nach einem der Ansprüche 1 bis 19,
**dadurch gekennzeichnet,**
**dass** der Kontaktwinkel eines 10 µl Wassertropfens auf der porösen oxidkeramischen Beschichtung ohne hydrophobe Nachbeschichtung nach 15 Stunden Bestrahlung mit 1 mW/cm$^2$ und 30 Tagen Dunkelheit und erneuter Bestrahlung mit vorzugsweise 1 mW/cm$^2$ UV-A Schwarzlicht für drei Stunden weniger als 8°, vorzugsweise weniger als 7°beträgt.

**21.** Keramischer Formkörper nach einem der vorhergehenden Ansprüche,
**dadurch gekennzeichnet,**
**dass** die Beschichtung eine superhydrophobe Oberfläche aufweist, wobei die superhydrophobe Oberfläche einen Kontakt- oder Randwinkel von wenigstens 140° für Wasser aufweist.

**22.** Keramischer Formkörper nach Anspruch 21,
**dadurch gekennzeichnet,**
**dass** die superhydrophobe Oberfläche unter Verwendung von einer oder mehrerer Verbindungen mit geradkettigen oder verzweigtkettigen aromatischen und/oder aliphatischen Kohlenwasserstoffresten mit funktionellen Gruppen, wobei die funktionellen Gruppen aus Amin, Thiol, Carboxylgruppe, Alkohol, Disulfid, Aldehyd, Sulfonat, Ester, Ether oder Mischungen davon ausgewählt sind, bereitgestellt ist.

**23.** Keramischer Formkörper nach Anspruch 22,
**dadurch gekennzeichnet,**
**dass** die superhydrophobe Oberfläche unter Verwendung von Verbindungen, die aus der Gruppe ausgewählt werden, die aus Silikonöl, Aminöle, Silikonharz, z.B. Alkylpolysiloxane, Alkoxysiloxane, Alkalisiliconate, Erdalkalisiliconate, Silan-Siloxan-Gemische, Aminosäuren und Gemische davon besteht, bereitgestellt ist.

**24.** Keramischer Formkörper nach Anspruch 21,
**dadurch gekennzeichnet,**
**dass** die superhydrophobe Oberfläche der Beschichtung unter Verwendung von Ormoceren, Polysiloxan, Alkylsilan und/oder Fluorsilan, vorzugsweise in Kombination mit SiO$_2$, bereitgestellt ist.

**25.** Keramischer Formkörper nach Anspruch 21,
**dadurch gekennzeichnet,**
**dass** die superhydrophobe Oberfläche unter Verwendung einer Lösung von Alkalisiliconaten in Wasser, wobei Alkali aus der Gruppe, die aus Lithium, Natrium, Kalium und Gemischen davon besteht, ausgewählt wird, aufgebracht ist.

**26.** Keramischer Formkörper nach einem der Ansprüche 21 bis 25,
**dadurch gekennzeichnet,**

**dass** die superhydrophobe Oberfläche einen Kontakt- oder Randwinkel von wenigstens 150° für Wasser aufweist, vorzugsweise von wenigstens 160°, noch weiter bevorzugt von wenigstens 170°.

27. Keramischer Formkörper nach Anspruch 25,
    **dadurch gekennzeichnet,**
    **dass** die Lösung von Alkalisiliconaten in Wasser ein Verdünnungsverhältnis von 1 : 100 bis 1 : 600 (Gew./Gew.), vorzugsweise ein Verdünnungsverhältnis von 1 : 250 bis 1 : 350 (Gew./Gew.) aufweist.

28. Keramischer Formkörper nach einem der Ansprüche 21 bis 27,
    **dadurch gekennzeichnet,**
    **dass** die superhydrophobe Oberfläche der Beschichtung Erhebungen aufweist.

29. Keramischer Formkörper nach Anspruch 28,
    **dadurch gekennzeichnet,**
    **dass** die Erhebungen der superhydrophoben Oberfläche unter Verwendung von partikulärem Material erzeugt sind.

30. Keramischer Formkörper nach Anspruch 21,
    **dadurch gekennzeichnet,**
    **dass** die superhydrophobe Oberfläche unter Verwendung einer Mischung aus Partikeln, beispielsweise $SiO_2$, und Hydrophobierungsmittel, beispielsweise Fluorsilan, aufgebracht ist.

31. Keramischer Formkörper nach einem der Ansprüche 1 bis 30,
    **dadurch gekennzeichnet,**
    **dass** die aus photokatalytisch induziertem Methylenblau-Abbau berechnete Photoneneffizienz bei der porösen oxidkeramischen Beschichtung wenigstens 0,015 %, vorzugsweise wenigstens 0,02 %, weiter vorzugsweise wenigstens 0,03 %, noch weiter bevorzugt wenigstens 0,04 % beträgt.

32. Verfahren zur Herstellung eines grobkeramischen Formkörpers, nämlich eines Dachziegels, Ziegels, Klinkers oder einer Fassadenwand, aus oxidkeramischem Basismaterial mit Kapillargefüge und mit bei Beregnung oder Berieselung mit Wasser selbstreinigender Oberfläche, wobei der Formkörper eine photokatalytisch aktive, poröse oxidkeramische Beschichtung aufweist, die die photokatalytisch aktiven, oxidkeramischen Materialien $TiO_2$, $Al_2O_3$ und $SiO_2$ umfaßt, wobei das $Al_2O_3$ Aluminiumoxid C ist, mit einer spezifischen Oberfläche in einem Bereich von 25 $m^2$/g bis 200 $m^2$/g, vorzugsweise von 40 $m^2$/g bis 150 $m^2$/g, und die poröse oxidkeramische Beschichtung auf der Oberfläche und in den Porenöffnungen sowie den freien Flächen des Kapillargefüges bis zu einer Tiefe von 2 mm, gemessen in vertikaler Richtung von der Oberfläche des keramischen Formkörpers, in dem grobkeramischen Formkörper aufgebracht ist,
    wobei das Verfahren die folgenden Schritte umfasst:

    (a) Mischen von photokatalytisch aktivem, oxidkeramischem Pulver, das $TiO_2$ und $Al_2O_3$ umfaßt, wobei das $Al_2O_3$ Aluminiumoxid C ist, einem anorganischen Stabilisierungsmittel, das $SiO_2$ umfasst, und einer Flüssigphase unter Bereitstellung einer Suspension,
    (b) Aufbringen der in Schritt (a) hergestellten Suspension auf das oxidkeramische Basismaterial unter Ausbildung einer Schicht,
    (c) Härten der in Schritt (b) bereitgestellten Schicht unter Ausbildung einer photokatalytisch aktiven, porösen oxidkeramischen Beschichtung.

33. Verfahren nach Anspruch 32,
    **dadurch gekennzeichnet,**
    **dass** auf das oxidkeramische Basismaterial in einem vorgelagerten Schritt wenigstens eine Schicht mit Erhebungen aufgebracht wird und dass die in Schritt (a) hergestellte Suspension auf das mit einer Schicht mit Erhebungen versehene oxidkeramische Basismaterial aufgebracht und nachfolgend im Schritt (c) gehärtet wird.

34. Verfahren nach einem der Anspruch 32 oder 33,
    **dadurch gekennzeichnet,**
    **dass** im Schritt (a) zusätzlich partikuläres Material zugemischt wird.

35. Verfahren nach Anspruch 33 oder 34,
    **dadurch gekennzeichnet,**

**dass** Erhebungen durch Fixieren von partikulärem Material auf dem oxidkeramischen Basismaterial gebildet werden.

36. Verfahren nach Anspruch 34 oder 35,
**dadurch gekennzeichnet,**
**dass** das partikuläre Material temperaturbeständiges gemahlenes Material ist, das vorzugsweise aus der Gruppe ausgewählt wird, die aus gemahlenem Gestein, Schamotte, Ton, Minerale, Keramikpulver wie SiC, Glas, Glasschamotte und Mischungen davon besteht.

37. Verfahren nach einem der Ansprüche 34 bis 36,
**dadurch gekennzeichnet,**
**dass** die mittlere Partikelgröße des partikulären Materials in einem Bereich bis zu 1500 nm, vorzugsweise von 5 nm bis 700 nm, weiter vorzugsweise von 5 nm bis 50 nm, liegt.

38. Verfahren nach einem der Ansprüche 32 bis 37,
**dadurch gekennzeichnet,**
**dass** der Suspension in Schritt (a) Polysiloxan zugesetzt wird.

39. Verfahren nach einem der Ansprüche 32 bis 38,
**dadurch gekennzeichnet,**
**dass** in Schritt (a) als Flüssigphase Wasser oder ein wässriges oder Wasser enthaltendes Medium verwendet wird.

40. Verfahren nach einem der Ansprüche 32 bis 39,
**dadurch gekennzeichnet,**
**dass** die Haftung zwischen photokatalytisch aktiver Beschichtung und oxidkeramischem Basismaterial verbessert wird, indem die in Schritt (c) hergestellte photokatalytisch aktive, poröse oxidkeramische Beschichtung mit Laserlicht, NIR- oder UV-Licht bestrahlt wird.

41. Verfahren nach einem der Ansprüche 32 bis 40,
**dadurch gekennzeichnet,**
**dass** in dem oxidkeramischen Basismaterial des Formkörpers photokatalytisch aktive, oxidkeramische Materialien enthalten sind, die aus der Gruppe ausgewählt werden, die aus $TiO_2$, $Al_2O_3$, $SiO_2$, und Mischungen davon besteht.

42. Verfahren nach einem der Ansprüche 32 bis 41 ,
**dadurch gekennzeichnet,**
**dass** das in Schritt (a) verwendete photokatalytisch aktive, oxidkeramische Pulver Partikel im Bereich von 5 nm bis 100 nm, vorzugsweise von 10 nm bis 50 nm, umfasst.

43. Verfahren nach einem der Ansprüche 32 bis 42,
**dadurch gekennzeichnet,**
**dass** das in dem photokatalytisch aktiven, oxidkeramischen Pulver und/oder in dem oxidkeramischen Basismaterial enthaltene $TiO_2$ wenigstens teilweise, vorzugsweise zu wenigstens 40 Gew.-%, bezogen auf die Gesamtmenge an $TiO_2$, in der Anatas-Struktur vorliegt.

44. Verfahren nach einem der Ansprüche 32 bis 43,
**dadurch gekennzeichnet,**
**dass** das in dem photokatalytisch aktiven, oxidkeramischen Pulver und/oder in dem oxidkeramischen Basismaterial enthaltene $TiO_2$ zu wenigstens 70 bis 100 Gew.-%, bezogen auf die Gesamtmenge an $TiO_2$, in der Anatas-Struktur vorliegt.

45. Verfahren nach einem der Ansprüche 32 bis 44 ,
**dadurch gekennzeichnet,**
**dass** das in dem photokatalytisch aktiven, oxidkeramischen Pulver und/oder in dem oxidkeramischen Basismaterial enthaltene $TiO_2$ in einer Mischung aus 70 bis 100 Gew.-% Anatas und 30 bis 0 Gew.% Rutil vorliegt.

46. Verfahren nach einem der Ansprüche 32 bis 45,
**dadurch gekennzeichnet,**
**dass** das in dem photokatalytisch aktiven, oxidkeramischen Pulver und/oder in dem oxidkeramischen Basismaterial enthaltene $TiO_2$ zu etwa 100 Gew.-%, bezogen auf die Gesamtmenge an $TiO_2$, in der Anatas-Struktur vorliegt.

**47.** Verfahren nach einem der Ansprüche 32 bis 46,
**dadurch gekennzeichnet,**
**dass** die in Schritt (b) bereitgestellte Schicht in Schritt (c) durch Trocknen bei einer Temperatur von bis zu 300°C und/oder durch Brennen bei einer Temperatur von mehr als 300°C bis 1100°C gehärtet wird.

**48.** Verfahren nach Anspruch 47,
**dadurch gekennzeichnet,**
**dass** die in Schritt (b) bereitgestellte Schicht vor dem Brennen in Schritt (c) durch Verflüchtigung der Flüssigphase wenigstens teilweise vorgetrocknet wird.

**49.** Verfahren nach einem der Ansprüche 32 bis 48,
**dadurch gekennzeichnet,**
**dass** die in Schritt (c) gehärtete Beschichtung unter Bereitstellung einer hydrophoben Oberfläche hydrophobiert oder superhydrophobiert wird.

**50.** Verfahren nach einem der Ansprüche 32 bis 49,
**dadurch gekennzeichnet,**
**dass** im Schritt (a) zusätzlich ein Hydrophobierungsmittel zugegeben wird und die in Schritt (b) bereitgestellte Beschichtung im Schritt (c) durch Trocknen bei einer Temperatur bis zu 300°C gehärtet wird.

**51.** Verfahren nach Anspruch 49,
**dadurch gekennzeichnet,**
**dass** zur Hydrophobierung ein anorganisch-organisches Hybridmolekül, vorzugsweise eine Polysiloxanlösung oder eine Alkali- oder Erdalkalisiliconatlösung, verwendet wird.

**52.** Verfahren nach Anspruch 49,
**dadurch gekennzeichnet,**
**dass** die superhydrophobe Oberfläche unter Verwendung einer oder mehrerer Verbindungen mit geradkettigen oder verzweigtkettigen aromatischen und/oder aliphatischen Kohlenwasserstoffresten mit funktionellen Gruppen, wobei die funktionellen Gruppen aus Amin, Thiol, Carboxylgruppe, Alkohol, Disulfid, Aldehyd, Sulfonat, Ester, Ether oder Mischungen davon ausgewählt werden, bereitgestellt wird.

**53.** Verfahren nach Anspruch 52,
**dadurch gekennzeichnet,**
**daß** die superhydrophobe Oberfläche unter Verwendung von Verbindungen, die aus der Gruppe ausgewählt werden, die aus Silikonöl, Aminöle, Silikonharz, z.B. Alkylpolysiloxane, Alkoxysiloxane, Alkalisiliconate, Erdalkalisiliconat, Silan-Siloxan-Gemische, Aminosäuren und Gemischen davon, besteht, bereitgestellt wird.

**54.** Verfahren nach Anspruch 49,
**dadurch gekennzeichnet,**
**dass** die superhydrophobe Oberfläche unter Verwendung von Ormoceren, Polysiloxan, Alkylsilan und/oder Fluorsilan, vorzugsweise in Mischung mit $SiO_2$, bereitgestellt wird.

**55.** Verfahren nach einem der Ansprüche 49 bis 54,
**dadurch gekennzeichnet,**
**dass** zur Erzeugung einer superhydrophoben Oberfläche mit Erhebungen bei der Hydrophobierung partikuläres Material zugesetzt wird.

**Claims**

**1.** Shaped ceramic body, namely a roofing tile, brick, clinker or an exterior wall, composed of oxide-ceramic base material having a capillary microstructure and having a surface which is self-cleaning when water rains onto it or is sprayed onto it, **characterized in that** the shaped body has a porous oxide-ceramic coating which is photocatalytically active and comprises the photocatalytically active, oxide-ceramic materials $TiO_2$, $Al_2O_3$ and $SiO_2$, where the $Al_2O_3$ is aluminium oxide C, and has a specific surface area in the range from 25 $m^2/g$ to 200 $m^2/g$, preferably from 40 $m^2/g$ to 150 $m^2/g$.

**2.** Shaped ceramic body according to Claim 1, **characterized in that** the oxide-ceramic base material has a capillary microstructure and the porous oxide-ceramic coating has been applied to the surface and into the pore openings and also the free surfaces of the capillary microstructure close to the surface in the interior of the shaped ceramic body.

**3.** Shaped ceramic body according to Claim 1, **characterized in that** the pore openings are intergranular and/or intragranular.

**4.** Shaped ceramic body according to any of Claims 1 to 3, **characterized in that** the free breathing cross section of the shaped ceramic body through the applied porous oxide-ceramic coating has been reduced by less than 10%, preferably less than 5%, based on the free breathing cross section of an uncoated shaped ceramic body.

**5.** Shaped ceramic body according to any of Claims 1 to 4, **characterized in that** the porous oxide-ceramic coating has been applied to a depth of 1 mm, preferably to a depth of 2 mm, measured in the vertical direction from the surface of the shaped ceramic body, in the shaped ceramic body.

**6.** Shaped ceramic body according to any of the preceding claims, **characterized in that** the coating has a specific surface area in the range from 40 $m^2$/g to 100 $m^2$/g.

**7.** Shaped ceramic body according to any of the preceding claims, **characterized in that** the mean thickness of the coating is in the range from 50 nm to about 50 $\mu$m, preferably from 100 nm to 1 $\mu$m.

**8.** Shaped ceramic body according to any of the preceding claims, **characterized in that** at least one layer having raised regions is located between the oxide-ceramic base material and the photocatalytically active, porous oxide-ceramic coating, the oxide-ceramic base material has raised regions and/or the photocatalytically active, porous oxide-ceramic coating is configured as a layer having raised regions.

**9.** Shaped ceramic body according to Claim 8, **characterized in that** the raised regions are formed by particulate material fixed on the oxide-ceramic base material.

**10.** Shaped ceramic body according to Claim 9, **characterized in that** the particulate material is heat-resistant ground material which is preferably selected from the group consisting of milled rock, chamotte, clay, minerals, ceramic powder such as SiC, glass, glass chamotte and mixtures thereof.

**11.** Shaped ceramic body according to Claim 9 or 10, **characterized in that** the size of the particles and/or the raised regions is/are in the range up to 1500 nm, preferably from 5 nm to 700 nm, more preferably from 5 nm to 50 nm.

**12.** Shaped ceramic body according to any of the preceding claims, **characterized in that** the oxide-ceramic base material of the shaped body comprises photocatalytically active, oxide-ceramic materials selected from the group consisting of $TiO_2$, $Al_2O_3$, $SiO_2$ and mixtures thereof.

**13.** Shaped ceramic body according to any of the preceding claims, **characterized in that** the photocatalytically active, oxide-ceramic material has an average particle size in the range from 5 nm to 100 nm, preferably from 10 nm to 50 nm.

**14.** Shaped ceramic body according to any of the preceding claims, **characterized in that** the $TiO_2$ present in the photocatalytically active, porous oxide-ceramic coating and/or in the oxide-ceramic base material is at least partly, preferably to an extent of at least 40% by weight, based on the total amount of $TiO_2$, present in the anatase form.

**15.** Shaped ceramic body according to any of the preceding claims, **characterized in that** at least 70% by weight, based on the total amount of $TiO_2$, of the $TiO_2$ present in the photocatalytically active, porous oxide-ceramic coating and/or in the oxide-ceramic base material is present in the anatase form.

**16.** Shaped ceramic body according to any of the preceding claims, **characterized in that** the $TiO_2$ is in the form of a mixture of from 70 to 100% by weight of anatase and from 30 to 0% by weight of rutile.

**17.** Shaped ceramic body according to any of the preceding claims, **characterized in that** about 100% by weight of the $TiO_2$ is present in the anatase form.

**18.** Shaped ceramic body according to any of Claims 1 to 17, **characterized in that** the contact angle of a 10 $\mu$l droplet

of water on the porous oxide-ceramic coating without hydrophobic after-coating after irradiation with 1 mW/cm$^2$ of UV-A black light for 15 hours is less than 7°, preferably less than 5°, more preferably less than 4°.

19. Shaped ceramic body according to any of Claims 1 to 18, **characterized in that** the contact angle of a 10 µl droplet of water on the porous oxide-ceramic coating without hydrophobic after-coating after irradiation with 1 mW/cm$^2$ of UV-A black light for 15 hours and 30 days of darkness is less than 20°, preferably less than 18°, more preferably less than 14°.

20. Shaped ceramic body according to any of Claims 1 to 19, **characterized in that** the contact angle of a 10 µl droplet of water on the porous oxide-ceramic coating without hydrophobic after-coating after irradiation with 1 mW/cm$^2$ of UV-A black light for 15 hours and 30 days of darkness and renewed irradiation with preferably 1 mW/cm$^2$ of UV-A black light for three hours is less than 8°, preferably less than 7°.

21. Shaped ceramic body according to any of the preceding claims, **characterized in that** the coating has a superhydrophobic surface having a contact or wetting angle of at least 140° for water.

22. Shaped ceramic body according to Claim 21, **characterized in that** the superhydrophobic surface has been provided using one or more compounds having straight-chain or branched aromatic and/or aliphatic hydrocarbon radicals having functional groups, where the functional groups are selected from among amine, thiol, carboxyl, alcohol, disulphide, aldehyde, sulphonate, ester, ether and mixtures thereof.

23. Shaped ceramic body according to Claim 22, **characterized in that** the superhydrophobic surface has been provided using compounds selected from the group consisting of silicone oil, amine oils, silicone resin, e.g. alkylpolysiloxanes, alkoxysiloxanes, alkali metal siliconates, alkaline earth metal siliconates, silane/siloxane mixtures, amino acids and mixtures thereof.

24. Shaped ceramic body according to Claim 21, **characterized in that** the superhydrophobic surface of the coating has been obtained using Ormocers, polysiloxane, alkylsilane and/or fluorosilane, preferably in combination with SiO$_2$.

25. Shaped ceramic body according to Claim 21, **characterized in that** the superhydrophobic surface has been applied using a solution of alkali metal siliconates in water, where the alkali metal is selected from the group consisting of lithium, sodium, potassium and mixtures thereof.

26. Shaped ceramic body according to any of Claims 21 to 25, **characterized in that** the superhydrophobic surface has a contact or wetting angle of at least 150° for water, preferably at least 160°, even more preferably at least 170°.

27. Shaped ceramic body according to Claim 25, **characterized in that** the solution of alkali metal siliconates in water has a dilution ratio of from 1:100 to 1:600 (weight/weight), preferably a dilution ratio of from 1:250 to 1:350 (weight/weight).

28. Shaped ceramic body according to any of Claims 21 to 27, **characterized in that** the superhydrophobic surface of the coating has raised regions.

29. Shaped ceramic body according to Claim 28, **characterized in that** the raised regions of the superhydrophobic surface have been produced using particulate materials.

30. Shaped ceramic body according to Claim 21, **characterized in that** the superhydrophobic surface has been applied using a mixture of particles, for example SiO$_2$, and hydrophobicizing agent, for example fluorosilane.

31. Shaped ceramic body according to any of Claims 1 to 30, **characterized in that** the photon efficiency of the porous oxide-ceramic coating calculated from photocatalytically induced degradation of methylene blue is at least 0.015%, preferably at least 0.02%, more preferably at least 0.03%, even more preferably at least 0.04%.

32. Process for producing a shaped building ceramic body, namely a roofing tile, brick, clinker or an exterior wall, which is composed of an oxide-ceramic base material having a capillary microstructure and having a surface which is self-cleaning when water rains onto it or is sprayed onto it, with the shaped body having a photocatalytically active, porous oxide-ceramic coating which comprises the photo-catalytically active, oxide-ceramic materials TiO$_2$, Al$_2$O$_3$ and SiO$_2$, where the Al$_2$O$_3$ is aluminium oxide C, and has a specific surface area in the range from 25 m$^2$/g to 200

m$^2$/g, preferably from 40 m$^2$/g to 150 m$^2$/g, and the porous oxide-ceramic coating having been applied to the surface and into the pore openings and also the free surfaces of the capillary microstructure to a depth of 2 mm, measured in the vertical direction from the surface of the shaped ceramic body, in the shaped building ceramic body, wherein the process comprises the following steps:

    (a) mixing of a photocatalytically active, oxide-ceramic powder comprising $TiO_2$ and $Al_2O_3$, where the $Al_2O_3$ is aluminium oxide C, an inorganic stabilizer comprising $SiO_2$ and a liquid phase to give a suspension,
    (b) application of the suspension prepared in step (a) to the oxide-ceramic base material to form a layer,
    (c) curing of the layer produced in step (b) to form a photocatalytically active, porous oxide-ceramic coating.

33. Process according to Claim 32, **characterized in that** at least one layer having raised regions is applied to the oxide-ceramic base material in a preceding step and **in that** the suspension prepared in step (a) is applied to the oxide-ceramic base material provided with a layer having raised regions and is subsequently cured in step (c).

34. Process according to either of Claims 32 and 33, **characterized in that** particulate material is additionally mixed in in step (a).

35. Process according to Claim 33 or 34, **characterized in that** raised regions are formed by fixing particulate material on the oxide-ceramic base material.

36. Process according to Claim 34 or 35, **characterized in that** the particulate material is heat-resistant ground material which is preferably selected from the group consisting of milled rock, chamotte, clay, minerals, ceramic powder such as SiC, glass, glass chamotte and mixtures thereof.

37. Process according to any of Claims 34 to 36, **characterized in that** the mean particle size of the particulate material is in the range up to 1500 nm, preferably from 5 nm to 700 nm, more preferably from 5 nm to 50 nm.

38. Process according to any of Claims 32 to 37, **characterized in that** polysiloxane is added to the suspension in step (a).

39. Process according to any of Claims 32 to 38, **characterized in that** the liquid phase used in step (a) is water or an aqueous or water-comprising medium.

40. Process according to any of Claims 32 to 39, **characterized in that** the adhesion between the photocatalytically active coating and the oxide-ceramic base material is improved by irradiating the photocatalytically active, porous oxide-ceramic coating produced in step (c) with laser light, NIR radiation or UV light.

41. Process according to any of Claims 32 to 40, **characterized in that** photocatalytically active, oxide-ceramic materials selected from the group consisting of $TiO_2$, $Al_2O_3$, $SiO_2$ and mixtures thereof are present in the oxide-ceramic base material of the shaped body.

42. Process according to any of Claims 32 to 41, **characterized in that** the photocatalytically active, oxide-ceramic powder used in step (a) comprises particles in the range from 5 nm to 100 nm, preferably from 10 nm to 50 nm.

43. Process according to any of Claims 32 to 42, **characterized in that** the $TiO_2$ present in the photocatalytically active, oxide-ceramic powder and/or in the oxide-ceramic base material is at least partly, preferably to an extent of at least 40% by weight, based on the total amount of $TiO_2$, present in the anatase form.

44. Process according to any of Claims 32 to 43, **characterized in that** at least from 70 to 100% by weight, based on the total amount of $TiO_2$, of the $TiO_2$ present in the photocatalytically active, oxide-ceramic powder and/or in the oxide-ceramic base material is present in the anatase form.

45. Process according to any of Claims 32 to 44, **characterized in that** the $TiO_2$ present in the photocatalytically active, oxide-ceramic powder and/or in the oxide-ceramic base material is in the form of a mixture of from 70 to 100% by weight of anatase and from 30 to 0% by weight of rutile.

46. Process according to any of Claims 32 to 45, **characterized in that** about 100% by weight, based on the total amount of $TiO_2$, of the $TiO_2$ present in the photocatalytically active, oxide-ceramic powder and/or in the oxide-ceramic base material is present in the anatase form.

**47.** Process according to any of Claims 32 to 46, **characterized in that** the layer produced in step (b) is cured by drying at a temperature of up to 300°C and/or by firing at a temperature of from > 300°C to 1100°C in step (c).

**48.** Process according to Claim 47, **characterized in that** the layer produced in step (b) is at least partially predried by vaporization of the liquid phase prior to firing in step (c).

**49.** Process according to any of Claims 32 to 48, **characterized in that** the coating which has been cured in step (c) is hydrophobicized or superhydrophobicized to give a hydrophobic surface.

**50.** Process according to any of Claims 32 to 49, **characterized in that** a hydrophobicizing agent is additionally added in step (a) and the coating produced in step (b) is cured by drying at a temperature of up to 300°C in step (c).

**51.** Process according to Claim 49, **characterized in that** an inorganic-organic hybrid molecule, preferably a polysiloxane solution or an alkali metal or alkaline earth metal siliconate solution, is used for hydrophobicization.

**52.** Process according to Claim 49, **characterized in that** the superhydrophobic surface is provided using one or more compounds having straight-chain or branched aromatic and/or aliphatic hydrocarbon radicals having functional groups, where the functional groups are selected from among amine, thiol, carboxyl, alcohol, disulphide, aldehyde, sulphonate, ester, ether and mixtures thereof.

**53.** Process according to Claim 52, **characterized in that** the superhydrophobic surface is provided using compounds selected from the group consisting of silicone oil, amine oils, silicone resin, e.g. alkylpolysiloxanes, alkoxysiloxanes, alkali metal siliconates, alkaline earth metal siliconate, silane/siloxane mixtures, amino acids and mixtures thereof.

**54.** Process according to Claim 49, **characterized in that** the superhydrophobic surface is provided using Ormocers, polysiloxane, alkylsilane and/or fluorosilane, preferably in admixture with $SiO_2$.

**55.** Process according to any of Claims 49 to 54, **characterized in that** particulate material is added in the hydrophobicization to produce a superhydrophobic surface having raised regions.

**Revendications**

**1.** Corps moulé céramique, à savoir une tuile, une brique, une brique hollandaise ou un pavement pour façade, en un matériau de base en céramique oxydée avec structure capillaire et avec une surface autonettoyante par arrosage ou irrigation avec de l'eau, **caractérisé en ce que**
le corps moulé présente un revêtement poreux en céramique oxydée, où le revêtement est actif de manière photocatalytique et les matériaux de céramique oxydée, photocatalytiquement actifs comprennent $TiO_2$, $Al_2O_3$ et $SiO_2$, où le $Al_2O_3$ est l'oxyde d'aluminium C, et présente une surface spécifique située dans l'intervalle allant de 25 m²/g à 200 m²/g, de préférence de 40 m²/g à 150 m²/g.

**2.** Corps moulé céramique selon la revendication 1, **caractérisé en ce que** le matériau de base en céramique oxydée présente une structure capillaire et le revêtement poreux en céramique oxydée est appliqué sur la surface et dans les ouvertures des pores, ainsi que sur les surfaces libres de la structure capillaire près de la surface à l'intérieur du corps moulé céramique.

**3.** Corps moulé céramique selon la revendication 1, **caractérisé en ce que** les ouvertures des pores sont formées de manière intergranulaire et/ou intragranulaire.

**4.** Corps moulé céramique selon l'une des revendications 1 à 3, **caractérisé en ce que** la coupe transversale d'échange libre du corps moulé céramique est diminuée par le revêtement poreux en céramique oxydée appliqué de moins de 10%, de préférence moins de 5%, sur base de la coupe transversale d'échange libre d'un corps moulé céramique non revêtu.

**5.** Corps moulé céramique selon l'une des revendications 1 à 4, **caractérisé en ce que** le revêtement poreux en céramique oxydée est appliqué dans le corps moulé céramique jusqu'à une profondeur de 1 mm, de préférence jusqu'à une profondeur de 2 mm, mesurée en direction verticale depuis la surface du corps moulé céramique.

**6.** Corps moulé céramique selon l'une des revendications précédentes, **caractérisé en ce que** le revêtement présente une surface spécifique située dans l'intervalle allant de 40 m$^2$/g à 100 m$^2$/g.

**7.** Corps moulé céramique selon l'une des revendications précédentes, **caractérisé en ce que** l'épaisseur moyenne de couche du revêtement se situe dans l'intervalle allant de 50 nm à 50 $\mu$m, de préférence de 100 nm à 1 $\mu$m.

**8.** Corps moulé céramique selon l'une des revendications précédentes, **caractérisé en ce qu'**entre le matériau de base en céramique oxydée et le revêtement poreux en céramique oxydée, photocatalytiquement actif, est agencée au moins une couche avec bosses, le matériau de base en céramique oxydée présente des bosses et/ou le revêtement poreux en céramique oxydée, photocatalytiquement actif, est formé comme une couche avec bosses.

**9.** Corps moulé céramique selon la revendication 8, **caractérisé en ce que** les bosses sont formées par un matériau particulaire fixé sur le matériau de base en céramique oxydée.

**10.** Corps moulé céramique selon la revendication 9, **caractérisé en ce que** le matériau particulaire est un matériau broyé résistant à la température, qui est choisi de préférence, dans le groupe qui consiste en la roche broyée, l'argile réfractaire, l'argile, des minéraux, la poudre céramique comme SiC, le verre, le verre réfractaire ou leurs mélanges.

**11.** Corps moulé céramique selon la revendication 9 ou 10, **caractérisé en ce que** la taille des particules et/ou les bosses se situent dans un intervalle de jusqu'à 1500 nm, de préférence allant de 5 nm à 700 nm, de manière plus préférée, de 5 nm à 50 nm.

**12.** Corps moulé céramique selon l'une des revendications précédentes, **caractérisé en ce que** le matériau de base en céramique oxydée du corps moulé contient des matériaux de céramique oxydée, photocatalytiquement actifs, qui sont choisis dans le groupe, qui consiste en TiO$_2$, Al$_2$O$_3$, SiO$_2$ et leurs mélanges.

**13.** Corps moulé céramique selon l'une des revendications précédentes, **caractérisé en ce que** le matériau de céramique oxydée, photocatalytiquement actif, présente une taille moyenne des particules situées dans l'intervalle allant de 5 nm à 100 nm, de préférence de 10 nm à 50 nm.

**14.** Corps moulé céramique selon l'une des revendications précédentes, **caractérisé en ce que** le TiO$_2$ présent dans le revêtement poreux de céramique oxydée, photocatalytiquement actif et/ou dans le matériau de base en céramique oxydée est présent au moins partiellement, de préférence à au moins 40% en poids, sur base de la quantité totale de TiO$_2$, en la structure anatase.

**15.** Corps moulé céramique selon l'une des revendications précédentes, **caractérisé en ce que** le TiO$_2$ présent dans le revêtement poreux de céramique oxydée, photocatalytiquement actif et/ou dans le matériau de base en céramique oxydée est présent à au moins 70% en poids, sur base de la quantité totale de TiO$_2$, en la structure anatase.

**16.** Corps moulé céramique selon l'une des revendications précédentes, **caractérisé en ce que** le TiO$_2$ est présent sous forme d'un mélange de 70 à 100% en poids d'anatase et de 30 à 0% en poids de rutile.

**17.** Corps moulé céramique selon l'une des revendications précédentes, **caractérisé en ce que** le TiO$_2$ est présent à environ 100% en poids en la structure anatase.

**18.** Corps moulé céramique selon l'une des revendications 1 à 17, **caractérisé en ce que** l'angle de contact d'une goutte d'eau de 10 $\mu$l sur le revêtement poreux en céramique oxydée sans revêtement ultérieur hydrophobe, se situe après 15 heures de rayonnement avec de la lumière noire UV-A de 1 mW/cm$^2$, à moins de 7°, de préférence moins de 5°, de manière encore plus préférée, moins de 4°.

**19.** Corps moulé céramique selon l'une des revendications 1 à 18, **caractérisé en ce que** l'angle de contact d'une goutte d'eau de 10 $\mu$l sur le revêtement poreux en céramique oxydée sans revêtement ultérieur hydrophobe, se situe après 15 heures de rayonnement avec de la lumière noire UV-A de 1 mW/cm$^2$ et 30 jours d'obscurité, à moins de 20°, de préférence moins de 18°, de manière encore plus préférée, moins de 14°.

**20.** Corps moulé céramique selon l'une des revendications 1 à 19, **caractérisé en ce que** l'angle de contact d'une goutte d'eau de 10 $\mu$l sur le revêtement poreux en céramique oxydée sans revêtement ultérieur hydrophobe, se situe après 15 heures de rayonnement avec de la lumière noire UV-A de 1 mW/cm$^2$, 30 jours d'obscurité et à nouveau, rayonnement avec de la lumière noire UV-A de 1 mW/cm$^2$ pendant 3 heures, à moins de 8°, de préférence moins de 7°.

21. Corps moulé céramique selon l'une des revendications précédentes, **caractérisé en ce que** le revêtement présente une surface superhydrophobe, où la surface superhydrophobe présente un angle de contact ou de mouillage d'au moins 140° pour l'eau.

22. Corps moulé céramique selon la revendication 21, **caractérisé en ce que** la surface superhydrophobe est préparée en utilisant un ou plusieurs composés avec restes hydrocarbure aromatiques et/ou aliphatiques, linéaires ou ramifiés, avec groupes fonctionnels, où les groupes fonctionnels sont choisis parmi amine, thiol, groupe carboxyle, alcool, disulfure, aldéhyde, sulfonate, ester, éther ou leurs mélanges.

23. Corps moulé céramique selon la revendication 22, **caractérisé en ce que** la surface superhydrophobe est préparée en utilisant des composés, qui sont choisis parmi le groupe qui consiste en les huiles de silicone, les huiles d'amine, les résines de silicone, par exemple un alkylpolysiloxane, un alcoxysiloxane, un siliconate alcalin, un siliconate alcalino-terreux, des mélanges silane-siloxane, des acides aminés et leurs mélanges.

24. Corps moulé céramique selon la revendication 21, **caractérisé en ce que** la surface superhydrophobe du revêtement est préparée en utilisant des ormocères, des polysiloxanes, des alkylsilanes et/ou des fluorosilanes, de préférence en combinaison avec SiO$_2$.

25. Corps moulé céramique selon la revendication 21, **caractérisé en ce que** la surface superhydrophobe est appliquée en utilisant une solution de siliconates alcalins dans l'eau, où l'alcalin est choisi dans le groupe, qui consiste en le lithium, le sodium, le potassium et leurs mélanges.

26. Corps moulé céramique selon l'une des revendications 21 à 25, **caractérisé en ce que** la surface superhydrophobe présente un angle de contact ou de mouillage d'au moins 150° pour l'eau, de préférence d'au moins 160°, de manière encore plus préférée, d'au moins 170°.

27. Corps moulé céramique selon la revendication 25, **caractérisé en ce que** la solution des siliconates alcalins dans l'eau présente un rapport de dilution de 1:100 à 1:600 (p/p), de préférence un rapport de dilution de 1:250 à 1:350 (p/p).

28. Corps moulé céramique selon l'une des revendications 21 à 27, **caractérisé en ce que** la surface superhydrophobe du revêtement présente des bosses.

29. Corps moulé céramique selon la revendication 28, **caractérisé en ce que** les bosses de la surface superhydrophobe sont produites par utilisation d'un matériau particulaire.

30. Corps moulé céramique selon la revendication 21, **caractérisé en ce que** la surface superhydrophobe est appliquée en utilisant un mélange de particules, par exemple de SiO$_2$, et d'un agent d'hydrophobisation, par exemple un fluorosilane.

31. Corps moulé céramique selon l'une des revendications 1 à 30, **caractérisé en ce que** l'efficacité photonique calculée à partir de la dégradation du bleu de méthylène induite de manière photocatalytique sur le revêtement poreux en céramique oxydée se situe à au moins 0,015%, de préférence au moins 0,02%, de manière encore préférée au moins 0,03%, de manière encore plus préférée au moins 0,04%.

32. Procédé de préparation d'un corps moulé en céramique grosse, à savoir une tuile, une brique, une brique hollandaise ou un pavement pour façade, en un matériau de base en céramique oxydée avec structure capillaire et avec une surface autonettoyante par arrosage ou irrigation avec de l'eau, où le corps moulé présente un revêtement poreux en céramique oxydée, photocatalytiquement actif, qui comprend les matériaux de céramique oxydée, photocatalytiquement actifs TiO$_2$, Al$_2$O$_3$ et SiO$_2$, où le Al$_2$O$_3$ est l'oxyde d'aluminium C, avec une surface spécifique située dans l'intervalle allant de 25 m$^2$/g à 200 m$^2$/g, de préférence de 40 m$^2$/g à 150 m$^2$/g, et le revêtement poreux en céramique oxydée est appliqué dans le corps moulé en céramique grosse, sur la surface et dans les ouvertures des pores, ainsi que sur les surfaces libres de la structure capillaire, jusqu'à une profondeur de 2 mm, mesurée en direction verticale de la surface du corps moulé céramique, où le procédé comprend les étapes suivantes :

(a) mélange d'une poudre en céramique oxydée, photocatalytiquement active, qui comprend TiO$_2$ et Al$_2$O$_3$, où

le Al$_2$O$_3$ est l'oxyde d'aluminium C, d'un agent inorganique de stabilisation, qui comprend SiO$_2$, et d'une phase liquide pour préparer une suspension,

(b) application de la suspension préparée à l'étape (a) sur le matériau de base en céramique oxydée avec formation d'une couche,

(c) durcissement de la couche préparée à l'étape (b) avec formation d'un revêtement poreux en céramique oxydée, photocatalytiquement actif.

33. Procédé selon la revendication 32, **caractérisé en ce que** sur le matériau de base en céramique oxydée, au moins une couche avec bosses est appliquée dans une étape préalable et **en ce que** la suspension préparée à l'étape (a) est appliquée sur le matériau de base en céramique oxydée muni de la couche avec bosses et ensuite, durcie à l'étape (c).

34. Procédé selon la revendication 32 ou 33, **caractérisé en ce qu'**un matériau particulaire est mélangé en outre à l'étape (a).

35. Procédé selon la revendication 33 ou 34, **caractérisé en ce que** les bosses sont formées par fixation du matériau particulaire sur le matériau de base en céramique oxydée.

36. Procédé selon la revendication 34 ou 35, **caractérisé en ce que** le matériau particulaire est un matériau broyé résistant à la température, qui est choisi de préférence, dans le groupe qui consiste en la roche broyée, l'argile réfractaire, l'argile, des minéraux, la poudre céramique comme SiC, le verre, le verre réfractaire ou leurs mélanges.

37. Procédé selon l'une des revendications 34 à 36, **caractérisé en ce que** la taille moyenne des particules du matériau particulaire se situe dans l'intervalle de jusqu'à 1500 nm, de préférence de 5 nm à 700 nm, de manière encore préférée de 5 nm à 50 nm.

38. Procédé selon l'une des revendications 32 à 37, **caractérisé en ce qu'**un polysiloxane est ajouté à la suspension à l'étape (a).

39. Procédé selon l'une des revendications 32 à 38, **caractérisé en ce que** dans l'étape (a), on utilise comme phase liquide, de l'eau ou un milieu aqueux ou contenant de l'eau.

40. Procédé selon l'une des revendications 32 à 39, **caractérisé en ce que** l'adhérence entre le revêtement photocatalytiquement actif et le matériau de base en céramique oxydée est améliorée **en ce que** le revêtement poreux en céramique oxydée, photocatalytiquement actif, préparé à l'étape (c), est irradié avec une lumière laser, une lumière NIR ou UV.

41. Procédé selon l'une des revendications 32 à 40, **caractérisé en ce que** le matériau de base en céramique oxydée du corps moulé contient des matériaux de céramique oxydée, photocatalytiquement actifs, qui sont choisis dans le groupe, qui consiste en TiO$_2$, Al$_2$O$_3$, SiO$_2$ et leurs mélanges.

42. Procédé selon l'une des revendications 32 à 41, **caractérisé en ce que** la poudre de céramique oxydée, photocatalytiquement active, utilisée à l'étape (a), comprend des particules situées dans l'intervalle allant de 5 nm à 100 nm, de préférence de 10 nm à 50 nm.

43. Procédé selon l'une des revendications 32 à 42, **caractérisé en ce que** le TiO$_2$ contenu dans la poudre de céramique oxydée, photocatalytiquement active et/ou dans le matériau de base en céramique oxydée, est présent au moins partiellement, de préférence à au moins 40% en poids, sur base de la quantité totale de TiO$_2$, en la structure anatase.

44. Procédé selon l'une des revendications 32 à 43, **caractérisé en ce que** le TiO$_2$ contenu dans la poudre de céramique oxydée, photocatalytiquement active et/ou dans le matériau de base en céramique oxydée, est présent à au moins 70 à 100% en poids, sur base de la quantité totale de TiO$_2$, en la structure anatase.

45. Procédé selon l'une des revendications 32 à 44, **caractérisé en ce que** le TiO$_2$ contenu dans la poudre de céramique oxydée, photocatalytiquement active et/ou dans le matériau de base en céramique oxydée, est présent sous forme d'un mélange de 70 à 100% en poids d'anatase et de 30 à 0% en poids de rutile.

46. Procédé selon l'une des revendications 32 à 45, **caractérisé en ce que** le TiO$_2$ contenu dans la poudre de céramique oxydée, photocatalytiquement active et/ou dans le matériau de base en céramique oxydée, est présent à environ 100% en poids, sur base de la quantité totale de $TiO_2$, en la structure anatase.

47. Procédé selon l'une des revendications 32 à 46, **caractérisé en ce que** la couche préparée à l'étape (b) est durcie à l'étape (c) par séchage à une température de jusqu'à 300°C et/ou par cuisson à une température de plus de 300°C à 1100°C.

48. Procédé selon la revendication 47, **caractérisé en ce que** la couche préparée à l'étape (b) est au moins partiellement, préséchée avant la cuisson à l'étape (c), par volatilisation de la phase liquide.

49. Procédé selon l'une des revendications 32 à 48, **caractérisé en ce que** le revêtement durci à l'étape (c) est rendu hydrophobe ou superhydrophobe par réalisation d'une surface hydrophobe.

50. Procédé selon l'une des revendications 32 à 49, **caractérisé en ce qu'**un agent d'hydrophobisation est ajouté en outre, à l'étape (a) et **en ce que** le revêtement préparé à l'étape (b) est durci à l'étape (c) par séchage à une température de jusqu'à 300°C.

51. Procédé selon la revendication 49, **caractérisé en ce que** pour l'hydrophobisation, on utilise une molécule hybride inorganique-organique, de préférence une solution de polysiloxane ou une solution de siliconate d'alcalin ou d'alcalino-terreux.

52. Procédé selon la revendication 49, **caractérisé en ce que** la surface superhydrophobe est préparée en utilisant un ou plusieurs composés avec restes hydrocarbure aromatiques et/ou aliphatiques, linéaires ou ramifiés, avec groupes fonctionnels, où les groupes fonctionnels sont choisis parmi amine, thiol, groupe carboxyle, alcool, disulfure, aldéhyde, sulfonate, ester, éther ou leurs mélanges.

53. Procédé selon la revendication 52, **caractérisé en ce que** la surface superhydrophobe est préparée en utilisant des composés, qui sont choisis parmi le groupe qui consiste en les huiles de silicone, les huiles d'amine, les résines de silicone, par exemple un alkylpolysiloxane, un alcoxysiloxane, un siliconate alcalin, un siliconate alcalino-terreux, des mélanges silane-siloxane, des acides aminés et leurs mélanges.

54. Procédé selon la revendication 49, **caractérisé en ce que** la surface superhydrophobe est préparée en utilisant des ormocères, des polysiloxanes, des alkylsilanes et/ou des fluorosilanes, de préférence en combinaison avec $SiO_2$.

55. Procédé selon l'une des revendications 49 à 54, **caractérisé en ce que** pour la production d'une surface superhydrophobe avec bosses, on ajoute un matériau particulaire lors de l'hydrophobisation.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0590477 B1
- DE 19911738 A1
- EP 0909747 A1
- WO 0179141 A1
- FR 2788707

- FR 2816610
- EP 0909747 A
- EP 1072507 A
- EP 1095923 A

**In der Beschreibung aufgeführte Nicht-Patentliteratur**

- *GIT Labor-Fachzeitschrift,* Dezember 1999, 1318-1320